# EUROPÄISCHE PATENTSCHRIFT

(11) **EP 3 045 826 B1**
(45) Veröffentlichungstag und Bekanntmachung des Hinweises auf die Patenterteilung: **06.10.2021**
(21) Anmeldenummer: 16000079.0
(22) Anmeldetag: 14.01.2016
(51) Int. Cl.: F24D 13/02, A47K 13/30, H05B 3/20, B60S 3/00, B60H 1/22

(54) **HEIZUNGSANORDNUNG MIT ELEKTRISCHEN INFRAROTHEIZELEMENT UND DEREN VERWENDUNG**
HEATING ASSEMBLY WITH ELECTRIC INFRARED HEATING ELEMENT AND THE USE THEREOF
AGENCEMENT DE CHAUFFAGE AVEC ELEMENT DE CHAUFFAGE INFRA ROUGE ET COMMENT L'UTILISER

(30) Priorität: 16.01.2015 DE 102015000746
(43) Veröffentlichungstag der Anmeldung: 20.07.2016
(73) Patentinhaber: Könighaus, Janine, 46446 Emmerich (DE)
(72) Erfinder: Könighaus, Till, 46 446 Emmerich (DE)
(74) Vertreter: Gehrke, Peter P.

(56) Entgegenhaltungen:
- CN-U- 202 109 574
- CN-U- 203 905 349
- DE-A1-102007 052 561
- JP-A- 2000 304 293
- US-B1- 6 294 758
- None

## Beschreibung

Die Erfindung betrifft eine Infrarotflächenheizanordnung mit einem elektrischen Infrarotflächenelement als Infrarotflächenheizung in einem Ferninfrarotbereich von 5 bis 200 µm mit einer ersten Lage als Rückwand zur Wärmeisolierung, einer zweiten Lage, welche ein eine Polyurethan-Verbindung enthaltendes kunststoffartiges Material enthält und als eine reflektierende Beschichtung ausgestaltet ist, und einer dritten Lage, die das elektrische Infrarotflächenelement als Heizmatte aufweist, welche ein eine Polyetheylentherephthalat-Verbindung enthaltendes kunststoffartiges Material enthält, und die Verwendung derselben.

Im Stand der Technik sind herkömmliche elektrische Raumheizungen bekannt, bei denen als Konvektionsheizung die Luft des Raumes als Übertragungsmittel dient. Die herkömmlichen Raumheizungen sind als Heizlüfter oder mit Lüftern ausgerüstete Speicheröfen ausgestaltet, die hauptsächlich durch die Konvektion wirken. Zum Beispiel werden bei Einsatz der herkömmlichen Strahlungsheizungen darüber hinaus den zu erwärmenden Flächen kostenträchtig Wärme zugeführt werden. Zur Heizung von Räumlichkeiten dienen auch herkömmliche elektrische Fußbodenheizungen, die die elektrische Wärmeenergie über die Fußbodenoberfläche an den zu beheizenden Raum abgeben. Die dazu notwendigen Heizleitungen werden im Fußboden eingebettet. Als Heizleitungen können Heizmatten oder mäanderförmig verlegte Heizleitungen dienen, wobei die Heizleitungen in der Regel mehrdrahtigen Aufbau aufweisen.

So wird in US 6 294 758 B1 ein Heizapparat beschrieben, der aus drei Schichten besteht, wobei die mittlere Schicht eine die Infrarotstrahlung aussendende Einrichtung aufweist, an deren Vorderseite und Unterseite Fläche auf Fläche jeweils eine Isolationsschicht angebracht ist. Es zeigt sich, dass gerade bei herkömmlichen WC-Sitzen im Falle deren Benutzung ein Kältegefühl sich beim Benutzer einstellt, welches unangenehm ist und zu vermeiden ist. Da der WC-Sitz eine dem Benutzer zugewandte Sitzfläche als Isolationsschicht aufweist, an deren Unterseite flächig die Schicht mit der Infrarotwellen aussendenden Einrichtung angebracht ist, ist die Erwärmung der das WC aufnehmenden Räumlichkeit gering, zumal die Aufheizung der Räumlichkeit wegen der Aufheizung in Gegenrichtung zu dem Benutzer sich einstellt. Zudem besteht die erfahrungsgemäß die Gefahr, dass nicht nur infolge von Überhitzung Verletzungen der Haut im Bereich der Oberschenkel des Benutzers, mit welchen der Benutzer auf dem WC-Sitz lastet, sich einstellen, sondern auch das Wohlbefinden des Benutzers beeinträchtigt wird, zumal lediglich der WC-Sitz erwärmt wird. Es zeigt sich, dass gerade bei herkömmlichen WC-Sitzen mit dem Einbau eines solchen herkömmlichen Heizapparats im Falle deren Benutzung ein in verschiedenen Bereichen des WC-Sitzes auftretendes Kältegefühl sich beim Benutzer einstellt, welches unangenehm und zu vermeiden ist. Dieses Dokument zeigt den Oberbegriff des unabhängigen Anspruchs 1.

In der DE 10 2007 052 561 A1 wird lediglich ein Verfahren zur Herstellung eines Infrarotstrahlers zur Erzeugung von Strahlen beschrieben, wobei die Außenform aus einem kohlefasergewebten Stoff mit modifiziertem Epoxidharz besteht, welches hochtemperaturbeständig sowie wärme- und IR-strahlungsleitfähig und laminiert ist. Es zeigt sich, dass die Infrarot-strahlung isoliert ist von Gestein und sonstigen Dämmstoffen und sonach nur eine geringe Wärme für den Außenbereich erzeugt wird. Auf Hinweise, auf welche Weise ein solcher Infrarotstrahler geeignet ist, die Aufheizung einer Räumlichkeit bereitzustellen; ohne Gefahr der Verbrennung und der Brandgefahr mit der Maßgabe der raschen Erwärmung der gesamten Raumluft und einhergehend damit der Verringerung der Energiekosten wird nicht Bezug genommen.

Das in der JP 2000-304 293 A offenbarte Verfahren zur Herstellung eines Hitzeisolierungsmaterials beschreibt den herkömmlichen Aufbau eines Infrarotheizelementes, welches aber nicht geeignet ist, die Anforderungen, wie leichte Montierbarkeit desselben, gleichmäßige Bestrahlung einer Räumlichkeit, kostengünstiger Betrieb, zu erfüllen.

Es zeigt sich, dass die herkömmlichen elektrischen Raumheizungen wenig wirtschaftlich arbeiten, da sowohl der gesamte Raum und die in dem Raum befindliche Luft aufgeheizt werden und überdies die Wärmeabstrahlung über die den Raum begrenzenden Wände und Decken nach außen trotz Wärmeisolierungen nicht vollständig unterbunden werden kann. Die Erwärmung der Umgebungsluft in dem Raum durch die herkömmliche Konvektion wird daher gerade in Zeiten der knappen und kostspieligen Energieressourcen zu vermeiden. Ebenso zeigt es sich, dass die durch die Konvektion erwärmte Umgebungsluft in einer Räumlichkeit bereits durch geringfügige Lüftung derselben nutzlos nach außen abgeführt und stark abgekühlt wird, so dass kostenträchtig erneut die Umgebungsluft erwärmt werden muss.

Ebenso zeigt sich der Nachteil, dass durch die herkömmlichen elektrischen Raumheizungen nur ungleichmäßig der Raum erwärmt wird, so dass das Wohlbefinden des in der Räumlichkeit befindlichen Benutzers stark eingeschränkt wird.

Ebenfalls erweist es sich von Nachteil, dass elektrische Raumheizungen, Zugerscheinungen von unterschiedlich erwärmter Luft in der Räumlichkeit nicht unterdrücken, sich auszeichnen, deren Auftreten gleichfalls dem Wohlbefinden des Benutzers als auch dessen Gesundheit abträglich ist.

Aufgabe der Erfindung soll es sein, eine Infrarotflächenheizanordnung bereitzustellen, welche ubiquitär verwendbar ist und ohne wesentliche bauliche Änderungen sich für den Einsatz an unterschiedlichsten Örtlichkeiten zu eignen vermag.

Die bereitzustellende Infrarotflächenheizanordnung soll zum Beispiel in sanitären Anlagen Verwendung finden, um den Austausch der in der sanitären Anlage befindlichen kostenträchtig erwärmten Umgebungsluft durch die kalte Außenluft infolge der häufigen Benutzung derselben durch Benutzer zu vermeiden.

Ebenso soll die bereitzustellende Infrarotflächenheizanordnung in sanitären Anlagen nur wenig Wärmeenergie aus Stromspeichern benötigen, um die sanitären Anlagen an Örtlichkeiten aufzustellen, die keinen Anschluss an das öffentliche Stromnetz bieten.

Die bereitzustellende Infrarotflächenheizanordnung soll darüber hinaus leicht anmontierbar sein und ein optisch ansprechendes Äußeres aufweisen.

Ebenso soll die Infrarotflächenheizanordnung nicht entwendbar sein, so dass bei der Anbringung derselben an Wänden und / oder Decken die Gefahr des Diebstahls derselben oder Vandalismus weitgehend unterbunden ist.

Darüber hinaus soll die Infrarotflächenheizanordnung die Strahlung möglichst gleichmäßig verteilen, um das Wohlbefinden des Benutzers, beispielsweise in WC-Anlagen oder Wasch-Anlagen, aufrechtzuerhalten.

Gleichfalls soll die Infrarotflächenheizanordnung möglichst kostengünstig betrieben werden, um den Verbrauch an elektrischer Energie möglichst zu verringern im Gegensatz zum Stand der Technik und um in Zeiten begrenzter Energiereserven nachhaltig mit diesen umgehen zu können.

Hinzutretend soll die bereitzustellende Infrarotflächenheizanordnung durch den geringen Verbrauch an elektrischem Strom die zur Erzeugung desselben auftretenden Immissionen beträchtlich zu verringern helfen.

Des Weiteren soll die bereitzustellende Infrarotflächenheizanordnung leicht herstellbar sein, um sowohl den Verbrauch an Werkstoffen zu senken, als auch die Kosten für die Entsorgung beschädigter Infrarotflächenheizanordnung zu verringern.

Hinzukommend soll die Infrarotflächenheizanordnung sich für den Einsatz in Büros, Wohnzimmern, als Fußbodenheizung, Mobilfunktelefonen, Unter-Tisch-Heizung und als mobile Heizungseinrichtung eignen.

Zudem soll die Infrarotflächenheizanordnung eine im Betrieb sparsame Strahlungsquelle zur Erwärmung in WC-Anlagen sein, um den die Erwärmung in WC-Anlagen bestimmenden Maßgaben gesetzlicher Vorschriften Genüge zu tun.

Schließlich soll die bereitzustellende Infrarotflächenheizanordnung auch für den Einsatz in großen Räumlichkeiten geeignet sein, um diese gezielt und punktuell aufzuheizen.

Die Aufgabe wird gelöst durch den Hauptanspruch und die Nebenansprüche. Die Unteransprüche betreffen bevorzugte Ausgestaltungen und Weiterentwicklungen der Erfindung.

Die Erfindung betrifft eine Infrarotflächenheizanordnung mit einem elektrischen Infrarotflächenelement als Infrarotflächenheizung in einem Ferninfrarotbereich von 5 bis 200 µm mit
einer ersten Lage als Rückwand zur Wärmeisolierung,
einer zweiten Lage, welche ein eine Polyurethan-Verbindung enthaltendes kunststoffartiges Material enthält und als eine reflektierende Beschichtung ausgestaltet ist, und
einer dritten Lage, die das elektrische Infrarotflächenelement als Heizmatte aufweist, welche ein eine Polyethylenterephthalat-Verbindung enthaltendes kunststoffartiges Material enthält,
welche dadurch gekennzeichnet ist, dass
die dritte Lage in ihren oberen und ihrem unteren Bereichen Durchbrüche aufweist,
die dritte Lage von der zweiten Lage beabstandet ist,
das Verhältnis der Gesamtfläche der dritten Lage zu der Fläche des Infrarotflächenelements 1,1 bis 6,0 beträgt,
das Verhältnis der Gesamtfläche der dritten Lage zu der Fläche der Durchbrüche der dritten Lage im Bereich von 6,0 bis 16,3 liegt,
das Infrarotflächenelement eine Heizleistung von 100 bis 1200 W aufweist.

Des Weiteren bezieht sich die Erfindung auf die Verwendung der Infrarotflächenheizanordnung in sanitären Anlagen, insbesondere transportablen, vorzugsweise fahrbaren, WC-Anlagen, Toilettenbrillen, Toilettendeckeln, Mobilfunktelefonen, Autowaschanlagen, Laderampen, in einem rückwärtigen Bereich von Lastkraftwagen, Bodenpaneelen, Abtauanlagen von Kühlhäusern und / oder Winterfrostschutzanlagen und / oder als Unter-Tisch-Heizung und / oder Fußbodenheizung.

So kann die erfindungsgemäße besonders energiearme robuste Infrarotflächenheizanordnung für vielseitige Einsatzmöglichkeiten das elektrische Infrarotflächenelement als Infrarotflächenheizung in einem Ferninfrarotbereich, insbesondere in dem Bereich von 7 bis 11 µm oder 8 bis 15 µm, anwenden.

Im Sinne der Erfindung wird unter Lage auch eine Platte, eine Wand, eine Beschichtung, eine wandähnliche Platte; eine Folie und dergleichen verstanden.

Im Sinne der Erfindung wird unter erster Lage auch eine Rückwand, eine Vorderwand oder eine Zwischenwand verstanden.

Im Sinne der Erfindung wird unter zweiter Lage auch eine Rückwand, eine Frontwand, eine Vorderwand oder eine Zwischenwand verstanden.

Im Sinne der Erfindung wird unter dritter Lage auch eine Rückwand, eine Frontwand, eine Vorderwand oder eine Zwischenwand verstanden.

Im Sinne der Erfindung wird unter reflektierende Beschichtung eine herkömmliche Strahlen, wie Infrarotstrahlen, Ferninfrarotstrahlen, usw. zurückwerfende Schicht, zum Beispiel eine Folie, wie eine aluminiumbeschichtete oder Aluminium enthaltende Folie, auch verstanden.

Im Sinne der Erfindung wird unter Wärmeisolierung eine Verringerung des Durchgangs von Wärmeenergie durch eine Lage auch verstanden.

Die erfindungsgemäße Infrarotflächenheizanordnung mit vorzugsweise einem Rahmen zur Aufnahme und zur Befestigung einer Infrarotflächenheizung an mindestens einer Wand und / oder einer Decke von Räumlichkeiten, insbesondere von sanitären Anlagen, und / oder Behältern, welche seitliche Wände als Rahmen, eine Frontwand und eine Rückwand aufweist, kann vorzugsweise so gestaltet sein, dass
auf der der Rückwand zugewandten Seite der Frontwand ein elektrisches Infrarotflächenelement als Infrarotflächenheizung angeordnet ist,
gegen die Rückwand Befestigungsstreben angesetzt sind,
das elektrische Infrarotflächenelement infrarote Strahlen mit einer Wellenlänge in einem Ferninfrarotbereich von 5 bis 200 µm aussendet.

Die erfindungsgemäße Infrarotflächenheizanordnung kann zur Befestigung an min-destens einer Wand und / oder einer Decke von Räumlichkeiten und / oder Behältern gekoppelt werden. Die Erfindung betrifft zudem sanitäre Anlagen, insbesondere transportable, vorzugsweise fahrbare, WC-Anlagen, welche eine Kabine mit einem Toilettensitz, einem Bewegungsmelder und einer gegen eine Wand angesetzte o.g. Infrarotflächenheizanordnung umfasst, der Bewegungsmelder einen Ein/Aus-Schalter ansteuert, der Ein/Aus-Schalter in einer Ein-Stellung die Infrarotflächenheizanordnung mit elektrischem Strom versorgt zur Ausstrahlung von Ferninfrarotstrahlen.

Die Erfindung schließt auch Wasch-Anlagen ein, welche eine Kabine mit einem Toilettensitz, einem Bewegungsmelder und einer gegen eine Wand angesetzte erfindungsgemäßen Infrarotflächenheizanordnung umfassen können, der Bewegungsmelder einen Ein/Aus-Schalter ansteuert, der Ein/Aus-Schalter in einer Ein-Stellung die Infrarotflächenheizanordnung mit elektrischem Strom versorgt zur Ausstrahlung von Ferninfrarotstrahlen.

Im Sinne der Erfindung wird unter sanitären Anlagen auch WC-Anlagen, z.B. fest installierte oder transportable WC-Anlagen, vorzugsweise fahrbare WC-Anlagen, verstanden.

Im Sinne der Erfindung wird auch unter sanitären Anlagen Wasch-Anlagen für Benutzer verstanden, die gleichfalls transportabel, vorzugsweise fahrbar sind.

Unter Räumlichkeiten werden im Sinne der Erfindung auch verstanden offene oder geschlossene Räume, wie Autowaschanlagen, offene und geschlossene Räumlichkeiten, wie Laderampen, Abtauanlagen von Kühlhäusern oder dergleichen.

Im Sinne der Erfindung wird unter Infrarotflächenheizanordnung auch eine starre Ausgestaltung oder eine elastische Ausbildung der Infrarotflächenheizanordnung verstanden.

Im Sinne der Erfindung wird unter Heizanordnung auch eine starre Ausgestaltung oder eine elastische Ausbildung der Heizanordnung verstanden.

Im Sinne der Erfindung wird unter Heizanordnung auch eine Infrarotflächenheizanordnung verstanden.

Unter Geräten und Gerätschaften wird im Sinne der Erfindung auch verstanden, Mobiltelefone, Bodenpaneelheizung, Unter-Tisch-Heizung, Winterfrostschutzanlagen, Bereiche von Lastkraftwagen, insbesondere die rückwärtigen zur Kopplung von Anhängern, und dergleichen.

In der erfindungsgemäßen Infrarotflächenheizanordnung dient die erste Lage zur Wärmeisolierung, vorzugsweise zusätzlich zur Wärmereflektion. Auch die zweite Lage, welche ein kunststoffartiges Material mit einer Polyurethan-Verbindung enthält oder als eine Beschichtung ausgestaltet ist, dient zur Wärmereflektion in der erfindungsgemäßen Infrarotflächenheizanordnung, vorzugsweise zusätzlich zur Wärmeisolierung.

Unter Wärmeisolierung wird auch im Sinne der Erfindung die Verhinderung des Wärmeaustausches, d. h. des Übergangs von Wärme vom Inneren der erfindungsgemäßen Infrarotflächenheizanordnung nach außen durch Leitung oder Strahlung, verstanden. Die erste Lage und/oder die zweite Lage können mit Wärmedämmstoffen, Wärmereflektionsfiltern oder auch mit, z.B. aluminiumbeschichteten, Folien versehen sein. Auch kann die zweite Lage eine Folie sein oder als Schicht auf die erste Lage aufgedruckt und/oder aufgedampft sein.

Die erfindungsgemäße Infrarotflächenheizanordnung umfasst die erste Lage und die dritte Lage. Die dritte Lage weist das elektrische Infrarotflächenelement auf. Die dritte Lage enthält eine Lage mit einer Polyethylentherephthalat-Verbindung als kunststoffartiges Material. Die erfindungsgemäße Infrarotflächenheizanordnung umfasst die erste und die dritte Lage, wobei die dritte Lage in ihren oberen und ihren unteren Bereichen Durchbrüche aufweist, wobei die dritte Lage vorzugsweise auch von der ersten Lage beabstandet ist. Die Beabstandung der dritten Lage von der ersten oder zweiten Lage kann zum Beispiel mittels Abstandshalter oder mittels des an den Rändern umlaufenden doppelseitig klebenden Klebebandes oder eines in einer innenseitig umlaufenden Nut eingebrachten Silikonklebers bereitgestellt werden. Die Beabstandung der dritten Lage von der ersten Lage dient in Zusammenwirken mit den oberen und den unte-ren Durchbrüchen zur Wärmezirkulation auch im Inneren der erfindungsgemäßen Infrarotflächenheizanordnung.

Das Verhältnis der Gesamtfläche der dritten Lage zu der Fläche des Infrarotflächenelements beträgt 1,1 bis 6,0, vorzugsweise 1,1 bis 5,4, noch mehr bevorzugt 1,1, 1,2, 1,4 oder 5,0, betragen. Unter der Gesamtfläche der dritten Lage kann im Sinne der Erfindung diejenige Fläche auch verstanden werden, die Fläche der dritten Lage einschließlich der Fläche des flächenförmig ausgebildeten Infrarotflächenelementes, welche Fläche auf Fläche, z. B. als Matte oder Heizmatte, auf der dritten Lage aufliegt. Unter Fläche des Infrarotflächenelementes wird im Sinne der Erfindung auch diejenige Fläche verstanden, welche nur die der Matte oder Heizmatte einnimmt.

Die Durchbrüche können mit einem Lochgitter versehen sein, um ein manuelles Eingreifen des Benutzers in das Innere der erfindungsgemäßen Infrarotflächenheizanordnung wirkungsvoll zu verhindern. Die Lochgitter, die in die Durchbrüche eingesetzt werden können, können vorzugsweise jeweils Löcher aufweisen, die jeweils einen Durchmesser von 2,0 mm aufweisen und von den Gittern begrenzt werden.

Auch können die Durchbrüche verschließbar ausgebildet sein, um das Ausmaß der Luft- oder Wärmezirkulation im Inneren zu steuern. Durch die Wärmezirkulation auch im Inneren der erfindungsgemäßen Infrarotflächenheizanordnung wird die Wirksamkeit und die Steuerung der Erwärmung mithilfe der erfindungsgemäßen Infrarotflächenheizanordnung besonders gefördert.

Die erfindungsgemäße Infrarotflächenheizanordnung besteht aus der ersten Lage, der zweiten Lage und der dritten Lage, wobei die dritte Lage von der zweiten Lage beabstandet ist und in ihrem oberen Bereich und ihrem unteren Bereich die Durchbrüche aufweist.

In der erfindungsgemäßen Infrarotflächenheizanordnung liegt das Verhältnis der Gesamtfläche der dritten Lage zu der Fläche der Durchbrüche der dritten Lage im Bereich von 6,0 bis 16,3.

Der obere Durchbruch ist vorzugsweise von dem oberen Rand der dritten Lage und der untere Durchbruch ist von deren unteren Rand gleich beabstandet. Die Durchbrüche weisen übereinstimmende Flächen auf. Das Verhältnis aus Abstand des oberen Randes der erfindungsgemäßen Infrarotflächenheizanordnung zu der Seite des oberen Durchbruchs, die dem oberen Rand zugewandt ist, und Höhe des Durchbruchs kann betragen 2,0 bis 4,0, vorzugsweise 2,8. Das Verhältnis aus dem Abstand des unteren Randes der erfindungsgemäßen Infrarotflächenheizanordnung zu der Seite des Durchbruchs, die dem unteren Rand zugewandt ist, und aus Höhe des Durchbruchs kann gleichfalls 2,0 bis 4,0, vorzugsweise 2,8, betragen.

Die beiden Durchbrüche sind in der dritten Lage zentriert möglichst angeordnet. Das Verhältnis aus Abstand der Ränder der dritten Lage der erfindungsgemäßen Infrarotflächenheizanordnung zu den Seiten der Durchbrüche, die diesen Rändern zugewandt sind, und Höhe der Durchbrüche kann 2,0 bis 4,0, vorzugsweise 2,5 bis 2,8, vorzugsweise 2,5 oder 2,8 betragen.

In einer besonderen Ausgestaltung der erfindungsgemäßen Infrarotflächenheizanordnung kann die erste Lage, die als Rückwand ausgebildet ist, einen Aluminium-Werkstoff enthalten und/oder ein Blech-, Keramik- und/oder Gips-Werkstoff enthalten. Als Gips eignet sich eine CaSO₄ x 2H₂O-Verbindung. Unter Keramik wird im Sinne der Erfindung auch verstanden solcher Werkstoff, der mit Ton, Tonminerale, Karbide, Nitride, Oxyde, Silicide, Kaolin oder sonstigen keramischen Substanzen hergestellt sein kann. Die beispielsweise Calciumsulfat-Doppelhydrat enthaltende erste Lage zeichnet sich besonders durch mangelnde Brennbarkeit und gute Verarbeitbarkeit aus. Als Gips eignen sich zudem sonstige unterschiedliche Gipsarten, die je nach Brenntemperatur herstellbar sind, wie Calciumsulfat-Doppelhydrat, Calciumsulfat-Halbhydrat oder -Anhydrid. Als Blech kann ein Feinblech mit einer Dicke von ≤ 3 mm, Mittelblech von 3 bis 4,76 oder Grobblech von 4,76 mm verwendet werden, je nach Erfordernis an die Formstabilität der erfindungsgemäßen Infrarotflächenheizanordnung.

Auch kann die erste Lage in einer einfachen Ausgestaltung als eine Blechwand ausgebildet sein, die von den elektrischen Strom leitenden Leitern usw. isoliert ist. Die dritte und die vierte Lage können Polyethylen-Verbindungen, eine Polyurethan-Verbindung oder auch sonstige Werkstoffe enthalten, wie Aluminium, Glas und/oder Keramik.

In einer weiteren bevorzugten Ausgestaltung der erfindungsgemäßen Infrarotflächenheizanordnung beträgt das Verhältnis der Gesamtdicke zu dem Abstand der dritten Lage von der ersten Lage 2,0 bis 6,0 vorzugsweise 1,7 bis 5,5, oder 1,7 oder 5,5. Auch kann das Verhältnis der Gesamtdicke zu dem Abstand der dritten Lage von der ersten Lage 1,5 bis 20,0 vorzugsweise 2,0 bis 17,0, .noch mehr bevorzugt 2,3 oder 7,3 oder 16,3, betragen. So kann unter Gesamtdicke auch im Sinne der Erfindung verstanden werden die Summe aus der Dicke der dritten Lage, ggf. der Dicke des Klebebandes und/oder der Dicke der vierten Lage, sowie der ersten Lage und dem Abstand der dritten Lage von der ersten Lage.

Unter Gesamtdicke kann auch im Sinne der Erfindung verstanden werden die Summe aus der Dicke der dritten Lage, ggf. der Dicke des Klebebandes, der Dicke der ersten Lage, der Dicke der zweiten Lage und der Dicke des vierten Lage sowie dem Abstand der dritten Lage von der zweiten Lage. In einer weiteren Ausgestaltung, in der auch die Ausgestaltung eine zweite Lage aufweist, beträgt das Verhältnis der Gesamtdicke zu dem Abstand der dritten Lage von der zweiten Lage 5,0 bis 13,0, vorzugsweise 6,6 bis 11,5, oder 6,6 oder 11,5. Auch erweist es sich als vorteilhaft, wenn das Verhältnis der Gesamtdicke zu dem Abstand der dritten Lage von der zweiten Lage 4,0 bis 15,0 vorzugsweise 5,2 bis 13, 3, noch mehr bevorzugt 5,2 oder 13,3, beträgt. Unter Dicke wird im Sinne der Erfindung auch verstanden, der Abstand, beispielsweise der Seite der zweiten Lage, die der ersten Lage zugewandt ist, von der Seite der zweiten Lage, die der ersten Lage zugewandt ist. Unter Dicke kann auch verstanden werden das Ausmaß der Tiefe der in Rede stehenden Lage.

In einer weiteren Ausgestaltung der erfindungsgemäßen Infrarotflächenheizanordnung kann eine vierte Lage an der dritten Lage angeordnet sein. Unter Anordnung wird im Sinne der Erfindung auch verstanden beispielsweise das Anliegen der Lagen Fläche auf Fläche, z.B. das Ansetzen der vierten Lage gegen die ihr zugewandte Seite der dritten Lage, oder das Beabstanden der Lagen mit ihren benachbarten Flächen voneinander, z.B. das parallele Ausrichten der vierten Lage zu der von ihr mit Maßgabe entfernte dritte Lage, unter Bildung eines Freiraums. Die vierte Lage kann in dieser Ausgestaltung gleichfalls in ihrem unteren Bereich und in ihrem oberen Bereich Durchbrüche aufweisen, die in Anordnung und Maßen mit der Ausgestaltung mit mit Durchbrüchen versehenen dritten Lage übereinstimmen können, soweit diese Durchbrüche aufweist.

Gerade in Ausgestaltungen der erfindungsgemäßen Infrarotflächenheizanordnung, die die Verhältnisse L/I der Gesamtfläche der dritten Lage zu der Fläche des Infrarotflächenelements, SD/A der Gesamtdicke zu dem Abstand der dritten Lage von der ersten Lage und/oder x-SD/A der Gesamtdicke SD zu dem Abstand der dritten Lage von der zweiten Lage und/oder L/Db der Gesamtfläche der dritten Lage zu der Fläche der Durchbrüche zeigen sich die besonderen Vorteile und Eigenschaften der erfindungsgemäßen Infrarotflächenheizanordnung verwirklicht durch das geschickte Zusammenwirken derselben oder zumindest eines Teils derselben miteinander.

In einer weiteren Ausgestaltung der erfindungsgemäßen Infrarotflächenheizanordnung kann die erste Lage gegen die dritte Lage flächig angesetzt sein. Ebenso kann die erste Lage gegen die zweite Lage und die zweite Lage gegen die dritte Lage flächig angesetzt sein. Die Lagesicherheit ohne Verschiebung der Flächen zueinander kann durch das form-, kraft- und/oder reibschlüssige Eingreifen der Ränder der Lagen in einen U-förmigen Rahmen gewährleistet werden; zudem unterstützt die Anordnung von herkömmlichen doppelseitigen Klebebändern, die hinreichende Kopplung der Lagen miteinander. Die Klebebänder werden vorteilhafterweise in den Bereichen der Ränder der Lagen zwischen benachbarten Lagen angeordnet. Als Klebebänder werden solche verwendet, die auf ihren beiden Seiten wärme- oder hitzestabile stabile Klebstoffe aufweisen und mit diesen beschichtet sind. Diese Klebebänder, auch Haftklebebänder genannt, verhindern wirkungsvoll die Verschiebbarkeit der Lagen zueinander bei Transport.

In einer zusätzlichen Ausgestaltung der erfindungsgemäßen Infrarotflächenheizanordnung kann diese in der Draufsicht geradlinig oder teilkreisförmig ausgebildet sein. In einer weiteren Ausgestaltung können an der Rückwand Streben, auch Befestigungsstreben genannt, zum Ansetzen gegen eine Wand und/oder Decke angeordnet sein. Die Streben ermöglichen je nach Erfordernis vor Ort eine lösbare Kopplung an der Wand/Decke.

Die erfindungsgemäße Infrarotflächenheizanordnung kann einen Rahmen mit seitlichen Wänden und eine Frontwand als z.B. dritte Lage oder vierte Lage und eine Rückwand als erste Lage aufweisen, wobei auf der der Rückwand zugewandten, also rückwärtigen, Seite der Frontwand das elektrische Infrarotflächenelement angeordnet sein kann. Gegen die Rückwand können Befestigungsstreben und / oder Befestigungsstellen zur Kopplung an Wänden und / oder Decken angesetzt sein. In einer besonderen Ausgestaltung der elektrischen Infrarotflächenheizanordnung mit dem Rahmen oder ohne denselben ist das elektrische Infrarotflächenelement in der Lage, Infrarotstrahlen mit einer Wellenlänge Ferninfrarotbereich, in dem Bereich von 5,0 bis 200 µm auszusenden. Es zeigt hierbei, dass bei Betrieb der erfindungsgemäßen Infrarotflächenheizanordnung mit dem elektrischen Infrarotflächenelement durch die Ausstrahlung der infraroten Strahlen in dem Ferninfrarotbereich die Infrarotstrahlungsenergie nur infolge der Absorption in Wärme umgewandelt wird und zur Temperaturerhöhung in dem absorbierenden Medium führt. Die Ferninfrarotstrahlen können auch die Haut des Benutzers erwärmen ohne gesundheitliche Schädigung und fördern das Wohlbefinden des Benutzers deutlich.

So kann die erfindungsgemäße Infrarotflächenheizanordnung statt ihrer starren Ausgestaltung mit einem elastischen Rahmen auch verformbar ausgebildet sein, der eine, vorzugsweise starre oder elastische, Frontwand und/oder einer, vorzugsweise starren oder elastischen, Rückwand aufnimmt, Auch können die Lagen und/oder der Rahmen in einer Ausgestaltung der erfindungsgemäßen Infrarotflächenheizanordnung statt starr elastisch ausgestaltet sein.

So kann die erfindungsgemäße Infrarotflächenheizanordnung als verformbare Ausgestaltung einen elastischen Rahmen umfassen, der eine, vorzugsweise verformbare, Frontwand und oder eine, vorzugsweise verformbare, Rückwand aufnehmen. In dieser Ausgestaltung der erfindungsgemäßen Infrarotflächenheizanordnung kann diese lediglich ein verformbares elektrisches Infrarotflächenelement als Infrarotflächenheizung als Heizmatte umfassen, die sich besonders als Sitzheizung in Sitzgelegenheiten, wie Wohnzimmersessel, Stühlen, Fahrzeugsitzen von Kraftfahrzeugen, und dergleichen eignet. Ebenso kann diese besondere Ausgestaltung der erfindungsgemäßen Infrarotflächenheizanordnung rahmenlos ausgestaltet sein, zum Beispiel mit einer starren oder verformbaren Frontwand und/oder einer starren oder verformbaren Rückwand, in welchen das elektrische Infrarotflächenelement als Infrarotflächenheizung als Heizmatte und /oder als Heizleitungen eingelassen und / oder auf welchen das elektrische Infrarotflächenelement als Infrarotflächenheizung als Heizmatte und /oder Heizleitungen angeordnet ist. Auch kann die Ferninfrarotheizung komplett in einem Gehäuse mit Aluminium als Rahmen bestehen.

Das elektrische Infrarotflächenelement kann als herkömmlicher flächenförmiger Infrarotstrahler ausgestaltet sein, der als Ferninfrarot-Strahler eine Heizleistung von 100 bis 1200 W, vorzugsweise 100 bis 130 W, 130 W, 300 W, 360 W, 400 W, 450 W, 540 W, 600 W, 1000 W oder 1200 W aufweist. Die Strahlstärke kann im Ferninfrarotbereich insbesondere zwischen 6-11 NM, vorteilhafterweise zwischen 6 bis 10 NM, bevorzugterweise 6, 7, 8, 9, 10 und / oder 11 NM, liegen. Das elektrische Infrarotflächenelement als Infrarotflächenheizung kann steuerbar und ein- und ausschaltbar sein. Es besteht zudem keine Verletzungsgefahr und auch keine Brandgefahr. Die Wärme ist steuerbar und ein- und ausschaltbar.

Aufgrund des geringen Energieverbrauchs der erfindungsgemäßen Infrarotflächenheizanordnung mit dem elektrischen Infrarotflächenelement eignet sich diese auch zur Verwendung in Autowaschanlagen zum Schutz vor Kälte, in dem Bereich von Laderampen zum Schutz vor widrigen Witterungsverhältnissen, in dem Bereich von Lastkraftwagen, der zur Kopplung von -Anhängern als Wärmeschutz des Benutzers dient.

Die WC-Anlagen, insbesondere transportable WC-Anlagen, umfassen eine Kabine, in welcher der an einen Sammelbehälter angeschlossene WC-Sitz mit Toilettenbrille angeordnet ist. Um möglichst lediglich eine Erwärmung des Benutzers in kalten Jahreszeiten bereitzustellen und nicht die Umgebungsluft in der Kabine kostenträchtig zu erwärmen, kann die erfindungsgemäße Infrarotflächenheizanordnung gegen eine Wand, Tür und / oder Decke der WC-Anlage gesetzt werden. Durch den Betrieb der erfindungsgemäßen Infrarotflächenheizanordnung wird gewährleistet, dass eine gleichmäßige Abstrahlung erfolgt, ohne punktuell den Benutzer zu erwärmen.

Gerade die WC-Anlage eignet sich insbesondere für den Einsatz der erfindungsgemäßen Infrarotflächenheizanordnung, da diese leicht in dieser anmontierbar und zwecks Aufrechterhaltung hinreichender hygienischer Umgebung leicht abwaschbar ist.

In einer besonderen Ausgestaltung der erfindungsgemäßen Infrarotflächenheizanordnung ist das herkömmliche elektrische Infrarotflächenelement zur Abstrahlung von Ferninfrarotstrahlen mattenförmig als ein flächenförmiger Infrarotstrahler ausgebildet; so kann das als Heizmatte ausgebildete elektrische Infrarotflächenelement eine elektrischen Strom leitende kristalline Kohlenstoff-Verbindung enthalten. Auf einer Schicht mit einer Polyethylen-Verbindung oder -Derivat kann eine streifenförmig, mäanderförmig, zick-zack-förmig und / oder hin-und her verlaufende dünne Beschichtung oder Leitungen, beispielsweise zur Bereitstellung derselben als ölige Zusammensetzung, aufgedruckt und/oder aufgeklebt sein, welche als elektrisches Infrarotflächenelement eine herkömmliche elektrischen Strom leitende, z.B. kristalline, Kohlenstoff-Verbindung enthalten kann. Diese kann sich vorteilhafterweise durch die Umsetzung der Energie bzw. Stroms von mehr als 60% bis 98 % Umsetzung in Wärme auszeichnen.

Die dritte Lage kann auch auf eine einer Polyesterschicht-Verbindung oder -Derivat, wie Polyesterterephthalat-Verbindung, aufweisende Schicht oder Platte aufgedruckte Beschichtung zur Abstrahlung von Ferninfrarot aufweisen, mit deren gegenüberliegenden Seiten die Leitungen zur Versorgung mit elektrischen Strom über deren gesamte Höhen oder Breiten elektrisch verbunden sein können. Die Beschichtung kann auch in der Polyesterschicht-Verbindung oder -Derivat, wie Polyesterterephthalat-Verbindung, aufweisende Lage, Schicht oder Platte mittels herkömmlicher Verfahren eingelassen, wie überschichtet, ein- und/oder übergossen oder dergleichen zur Bereitstellung einer Isolierung als Schutz gegen elektrischen Schlag sein.

Die Strom leitende Leitungen können auch annähernd vollflächig die Fläche des Infrarotflächenelement einnehmen, -die mäanderförmig und / oder zickzackförmig verlaufen können. Auf der der Rückwand zugewandten Seite der Frontwand ist das elektrische Infrarotflächenelement angeordnet und / oder in der Frontwand eingelassen, wie eingegossen , sind. Die Rückwand und / oder die Frontwand können aus einem kunststoffartigen Material, beispielsweise mit einer Polyethylen-Verbindung, hergestellt sein.

In einer besonderen Ausgestaltung der erfindungsgemäßen Infrarotflächenheizanordnung ist das elektrische Infrarotflächenelement als ein flächenförmiger Infrarotstrahler, der Heizmatten und / oder Heizleitungen aufweist, die mäanderförmig und / oder zickzackförmig verlaufen können. Auf der der Rückwand zugewandten Seite der Frontwand ist das elektrische Infrarotflächenelement angeordnet und / oder in der Frontwand eingelassen. Die Rückwand und / oder die Frontwand können aus einem kunststoffartigen Material, beispielsweise mit einer Polyethylen-Verbindung, hergestellt sein, um die Herstellungskosten niedrig zu halten.

Die Wasch-Anlagen, insbesondere transportable Wasch-Anlagen, umfassen eine Kabine, in welcher Waschgelegenheiten an einen Sammelbehälter angeschlossen sind, Zur Erwärmung des Benutzers in kalten Jahreszeiten in der Kabine befindet sich die erfindungsgemäße Infrarotflächenheizanordnung an einer Wand, Decke und / oder Tür anmontiert. Von Vorteil ist nicht nur der kostenträchtige Betrieb der erfindungsgemäßen Infrarotflächenheizanordnung in der Wasch-Anlage, sondern auch die leichte Sauberhaltung durch die Großflächigkeit der erfindungsgemäßen Infrarotflächenheizanordnung, so dass keine Einschränkung der Hygiene sich einstellt auch bei dauerhaftem Betrieb der Wasch-Anlage.

Die seitlichen Wände des Rahmens der erfindungsgemäßen Infrarotflächenheizanordnung können U-förmig mit zwei Schenkeln ausgebildet sein, welche über einen Abschnitt miteinander verbunden sind. Die zwei Schenkel können unterschiedlicher Dicke sein, wobei der vorderseitige Schenkel, der der Rückwand abgewandt ist, die Frontwand umgreift und als Lateralblende umlaufend ausgestaltet ist. Der rückwärtige Schenkel, der dem vorderseitigen Schenkel abgewandt bzw. von diesem beabstandet ist, kann die Rückwand umgreifen und bildet im Zusammenwirken mit dem vorderseitigen Schenkel eine hinreichende Lagesicherheit von Frontwand und Rückwand, so dass die erfindungsgemäße Infrarotflächenheizanordnung durch eine dauerhafte Formstabilität sich auszeichnet.

Die Dicke des rückwärtigen Schenkels der seitlichen Wände stimmt vorzugsweise mit der Dicke der Befestigungsstreben überein. Die Befestigungsstreben und / oder Befestigungsstellen sind mit der Rückwand verbunden und dienen der Befestigung der erfindungsgemäßen Infrarotflächenheizanordnung mit Decke und / oder Wänden.

In einer besonderen Ausgestaltung der erfindungsgemäßen Infrarotflächenheizanordnung wird diese gegen eine Wand mit Hilfe von Befestigungsstreben angesetzt, So eignen sich zur Befestigung der erfindungsgemäßen Infrarotflächenheizanordnung die gegen die rückwärtige Seite der Rückwand angesetzten voneinander beabstandete, parallel zueinander ausgerichtete Befestigungsstreben. Die Befestigungsstreben mit einem erstem Befestigungsmittel wirken mit den an oder in der Wand befindlichen Befestigungsgegenstücke kraft-, reib- und / oder formschlüssig zusammen.

So kann in einer Ausführungsform der erfindungsgemäßen Infrarotflächenheizanordnung ein Nippel als erstes Befestigungsmittel dienen, wobei dieser Nippel mit einer Schweißmutter oder einer Einpressmutter an der Befestigungsstrebe befestigt ist. Als Befestigungsgegenstücke dient vorzugsweise ein Federklipp, der zusammen mit dem Nippel eine Snap-In-Verbindung bereitstellt, um möglichst auch eine dauerhafte weitgehend unlösbare Kopplung der erfindungsgemäßen Infrarotflächenheizanordnung mit der Wand der WC-Anlage bereitzuhalten, so dass das Abreißen oder der Diebstahl der erfindungsgemäßen Infrarotflächenheizanordnung von Vorteil weitgehend unterbunden ist.

In einer weiteren Ausführungsform der erfindungsgemäßen Infrarotflächenheizanordnung kann diese gekrümmte oder teilkreisförmig ausgebildete seitliche Wände aufweisen zur Bereitstellung eines Bodenpaneels. Insbesondere können mindestens zwei gegenüberliegende Seitenwände soweit teilkreisförmig ausgebildet sein, dass die erfindungsgemäße Infrarotflächenheizanordnung die auszustrahlenden Infrarotstrahlen in einer vorbestimmten Weise zu bündeln vermag. Das Bodenpaneel wird auf dem Fußboden platziert und kann je nach Wunsch des Benutzers oder dem Erfordernis der Räumlichkeit bewegt werden.

Da die erfindungsgemäße Infrarotflächenheizanordnung sich durch einen geringen Verbrauch an Wärmeenergie auszeichnet, zumal im Vergleich zu den herkömmlichen elektrischen Raumheizungen die Umgebungsluft nicht durch Konvektion erwärmt wird, sind folgende Verwendungen vorteilhaft:
Die erfindungsgemäße Infrarotflächenheizanordnung mit dem elektrischen Infrarotflächenelement eignet sich zum Einsatz für Abtauanlagen von Kühlhäusern zum Erwärmen der gekühlten Lebensmittel ohne Veränderung der chemischen oder biochemischen Struktur derselben;
Ebenfalls eignet sich die erfindungsgemäße Infrarotflächenheizanordnung mit dem elektrischen Infrarotflächenelement zum Einsatz in Auftaugeräten zum Erwärmen gekühlter Flüssigkeiten und Getränke im Wellnessbereich, ohne das Geschmacksveränderungen für den Benutzer in Getränken zu beobachten ist.

Gleichfalls eignet sich die erfindungsgemäße Infrarotflächenheizanordnung mit dem elektrischen Infrarotflächenelement zum Einsatz in Winterfrostschutzanlagen zum energiearmen Auftauen von Waschflüssigkeiten.

Ebenso eignet sich die erfindungsgemäße Infrarotflächenheizanordnung zum Einsatz in Wohnzimmern, als Auflage von Schreibtischen und / oder Unter-Tisch-Heizung oder Fußbodenheizung.

Da die erfindungsgemäße Infrarotflächenheizanordnung bei ihrem Betrieb nicht nur durch geringen elektrischen Stromverbrauch, sondern auch durch Wartungsarmut sich auszeichnet, ist der Einsatz der erfindungsgemäßen Infrarotflächenheizanordnung in Örtlichkeiten mit einem hohen Maß oder Frequenz an Ein- und Ausschaltungen des elektrischen Infrarotflächenelementes, z.B. in Mobilfunktelefonen, vorteilhaft.

Ebenfalls kann die erfindungsgemäße Infrarotflächenheizanordnung im Bereich von Laderampen sich befinden, um gerade bei widrigen kälteren Witterungsbedingungen die Benutzer vor gesundheitlichen Gefahren und vor Erkältungen zu schützen.

Darüber hinaus kann die erfindungsgemäße Infrarotflächenheizanordnung in Winterfrostschutzanlagen eingesetzt werden. Auch kann die erfindungsgemäße Infrarotflächenheizanordnung in Mobiltelefonen eingesetzt werden, um ein wohliges Wärmegefühl dem Benutzer außerhalb von Räumlichkeiten zu geben.

Gleichfalls kann die erfindungsgemäße Infrarotflächenheizanordnung in WC-Deckeln oder WC-Ringen Anwendung finden, um das Sitzgefühl des Benutzers gerade in abgekühlten WC-Anlage innerhalb kurzer Zeit deutlich zu verbessern
Das elektrische Infrarotflächenelement kann in einer besonderen Ausgestaltung der erfindungsgemäßen Infrarotflächenheizanordnung durch einen herkömmlichen Bewegungsmelder angesteuert werden. Der herkömmliche Bewegungsmelder ist im Innenraum der Kabine der WC-Anlage angeordnet und steuert einen Ein/Aus-Schalter an. Bei dem Betreten der WC-Anlage durch den Benutzer schaltet der Bewegungsmelder den Ein/Aus-Schalter aus der Aus-Stellung in die Ein-Stellung, so dass das elektrische Infrarotflächenelement mit elektrischem Strom zur Ausstrahlung von Ferninfrarotstrahlung versorgt wird. Bei dem Verlassen der WC-Anlage durch den Benutzer schaltet der Bewegungsmelder den Ein/Aus-Schalter aus der Ein-Stellung in die Aus-Stellung, so dass die Versorgung des elektrischen Infrarotflächenelementes mit elektrischem Strom unterbrochen wird, den Verbrauch an elektrischen Strom auf das erforderliche Maß zu begrenzen.

Als Bewegungsmelder eignet sich beispielsweise ein Infrarot-Bewegungsmelder, der Änderungen der Infrarot-Strahlung, z.B. die Wärmeabstrahlung des Benutzers innerhalb einer Erfassungszone auswertet. Ein Alarm wird insofern ausgelöst, als die Temperaturänderung einen einstellbaren Grenzwert überschreitet. Die Überwachung der Anstiegsgeschwindigkeit der Temperatur kann zudem Fehlalarme durch normalen Temperaturanstieg, z.B. durch Sonneneinstrahlung verhindern. Möglich wäre der Bewegungsmelder auch in Zusammenarbeit mit einem Thermostat, das im System übergeordnet ist und eine Temperaturuntergrenze bestimmt.

Ebenso eignet sich ein Ultraschall-Bewegungsmelder, welcher Ultraschallwellen aussendet und die reflektierten Ultraschallwellen wieder empfängt. Weicht die Empfangsfrequenz von der Sendefrequenz ab, weil sich ein Körper des Benutzers im Überwachungsbereich bewegt, wird Alarm ausgelöst und der Bewegungsmelder schaltet den Ein-Aus-Schalter in die Ein-Stellung und versorgt das elektrische Infrarotelement mit elektrischem Strom. Weitere Bewegungsmelder können eingebaut werden als Fadenzugmelder und in Tretmatten.

Bei Verwendung der erfindungsgemäßen Infrarotflächenheizanordnung, beispielsweise im Bereich der Kupplung eines Anhängers und / oder eines Lastkraftwagens, wird durch den Bewegungsmelder gleichfalls Ferninfrarotstrahlen ausgesendet, um eine hinreichende Erwärmung des Benutzers durch Absorption bereitzuhalten.

Das elektrische Infrarotflächenelement der erfindungsgemäßen Infrarotflächenheizanordnung kann auch angesteuert werden durch einen Witterungsfühler, der als beispielsweise NTC-Widerstand, die Außentemperatur erfasst und diese als Führungsgröße an die Aufladesteuerung abgibt. Mit diesem Wert, weiteren Einstellwerten an der Aufladesteuerung, dem eingebauten Zeitglied und dem Freigabesignal der VNB-Tonfrequenz-Rundsteueranlage, wird das Steuersignal für den Aufladeregler gebildet. Die Aufladeregelung kann thermomechanisch oder elektronisch arbeiten. Zusammen mit dem Steuersignal der Aufladesteuerung und dem Temperaturwert des Kernfühlers errechnet ein Mikrokontroller im elektronischen Aufladeregler den Einschaltzeitpunkt und die Zeitdauer der Aufladung. Über ein beispielsweise im Wärmespeicher eingebautes Thermorelais schaltet der elektrische Aufladeregler den elektronischen oder elektrische Ein/Aus-Schalter in die Ein-Stellung, so dass das elektrische Infrarotflächenelement mit elektrischem Strom versorgt wird.

Ebenso kann das elektrische Infrarotflächenelement der erfindungsgemäßen Infrarotflächenheizanordnung angesteuert werden durch einen Raumtemperaturregler. Hierbei erfasst der Raumtemperaturregler die Raumtemperatur in der WC-Anlage, so dass bei Betreten der WC-Anlage der Benutzer eine wohlige Wärme empfinden wird.

Auch kann das elektrische Infrarotflächenelement der erfindungsgemäßen Infrarotflächenheizanordnung durch einen handbetätigbaren Ein/Aus-Schalter angesteuert werden. Der Ein/Aus-Schalter ist im innen gelegenen Bereich der Tür der WC-Anlage angeordnet und durch Betätigen des Ein/Aus-Schalters in die Ein-Stellung wird das elektrische Infrarotflächenelement mit elektrischem Strom versorgt. Vorzugsweise kann der Ein/Aus-Schalter zusätzlich mit einer mit ihm verbundenen Zeitschaltuhr nach dem Ablauf einer vorbestimmten Zeitdauer aus seiner Ein-Stellung in die Aus-Stellung geschaltet werden.

Aufgrund der besonderen technischen Erfolge der erfindungsgemäßen Infrarotflächenheizanordnung eignet sich diese beispielweise wie folgt:
- Einsatz bei Mobilheimen und Caravans, Gartenhäuschen, Wintergärten, Booten und Schiffen zur Erwärmung des Innenraums durch emissionsarme Strahlwärme im vorbestimmten Ferninfrarot, z.B. mit einer Wellenlänge von 6,0 bis 14 µm, und/oder einer Strahlstärke von 6-11 NM, vorzugsweise 6 bis 10 NM,
- Verwendung der emissionsarmen Ferninfrarot im PKW Sitzbereich und im allgemeinen PKW Bereich und im Motorraum als Vorwärmheizung, z.B. mit einer Wellenlänge von 6,0 bis 14 µm, und/oder einer Strahlstärke von 6-11 NM, vorzugsweise 6 bis 10 NM,
- weitere Verwendungen mit Ferninfrarot- / Infrarotheizmatte/Heizelementen, z.B. mit einer Wellenlänge von 6,0 bis 14 µm, und/oder einer Strahlstärke von 6-11 NM, vorzugsweise 6 bis 10 NM, zum Schutz vor Kälte, in Sitzmatten, in Sitzkissen, in Sofa, im Bereich der Küche, Bürotische, Gastronomiemöbel, wie Tresen, Theke, Hochtische, Esstische.

- zur Erwärmung des Raums über den Fußboden unter Beton, sowie unter Holz,
- zur Erwärmung des Raums über die Wände unter dem Putz,
- zur Erwärmung von Feuchträumen zur Trocknung von Wänden, zum Schutz vor Schimmelbildung und zum Aushärten von Beton- und Mauerwerken durch Einsatz von Ferninfrarotstrahlheizpaneelen bei einer Strahlstärke von 6 - 11 NM, vorzugsweise 6 bis 10 NM,
- zur Erwärmung von Schwimmhallen, Schwimmbädern, Swimmingpools durch Einsatz von Ferninfrarot Strahlheizungspaneele und Strahlheizmatten unter Fliesen und/oder Beton im Wasserbereich und im Außenbereich des Wassers zum Schutz vor Kälte,
- zum Schutz vor Frost bei Swimmingpool im Außenbereich, wie im Innenbereich durch Einsatz von Ferninfrarotheizmatten/Elementen unter Fliese oder unter Beton durch Strahlwärme, z.B. mit einer Strahlstärke von 6-11 NM, vorzugsweise 6 bis 10 NM,
- zur Erwärmung durch Strahlwärme von Katzendecken/-Kissen und Hundedecken/- Kissen und Decken für den Menschen in vorbestimmten Ferninfrarotbereich, z.B. mit einer Wellenlänge von 6,0 bis 14 µm, und/oder einer Strahlstärke von 6-11 NM, vorzugsweise 6 bis 10 NM, zum Schutz vor Kälte und für angenehmes Wohlbefinden,
- zum Schutz vor Kälte bei Hundefreihaltung und Zwingerhaltung durch Einsatz von Strahlwärme durch Ferninfrarotheizpaneele , z.B. mit einer Wellenlänge 4,0 bis 1.000 µm, vorzugsweise von 6,0 bis 14 µm, und/oder einer Strahlstärke von 6-11 NM, vorzugsweise 6 bis 10 NM,
- zum Schutz vor Frost bei Wasserspeicheranlagen und Wasserspeicherheizanlagen durch Einsatz von Ferninfrarotheizmatten, z.B. mit einer Wellenlänge von 6,0 bis 14 µm, und/oder einer Strahlstärke von 6-11 NM, vorzugsweise 6 bis 10 NM,
- zum Schutz vor Kälte bei Babywickeltischen, Wickeltischheizmatte und als Babymatratzenheizung durch Einsatz der sicheren Ferninfrarotstrahlwärme mit Ferninfrarotstrahlheizpaneele und Ferninfrarotheizmatten als Strahlwärme, z.B. mit einer Wellenlänge von 6,0 bis 14 µm, und/oder einer Strahlstärke von 6-11 NM, vorzugsweise 6 bis 10 NM,
- zur Anwendung bei Rheuma und Orthopädischen/Physiotherapeutischen Behandlungszwecken durch angenehme und gesunde Strahlwärme durch Ferninfrarotheizpaneel, z.B. mit einer Wellenlänge von 6,0 bis 14 µm, und/oder einer Strahlstärke von 6-11 NM, vorzugsweise 6 bis 10 NM, zumal die vom Heizpaneel absorbierte Wärme vom Körper aufgenommen und als schmerzlindernd und angenehm empfunden wird,
- zur Anwendung als Allergieheizung durch angewandte Ferninfrarotstrahlheizwärme durch Ferninfrarotheizpaneele, z.B. mit einer Wellenlänge von 6,0 bis 14 µm, und/oder einer Strahlstärke von 6-11 NM, vorzugsweise 6 bis 10 NM, zumal der Vorteil gegenüber konvektioneller Heizungen ist, dass die Heizung nicht über Luft übertragen wird, sondern über Gegenstände und Objekte im Raum und somit kein Staub in die Luftbahn im Raum bringt,
- im Einsatz Ferninfrarotheizpaneelen, wie Ferninfrarotheizmatten im Bereich von Aquaristik / Terraristik zur Erwärmung der Umgebung durch Ferninfrarotstrahlwärme im vorbestimmten Ferninfrarotbereich, z.B. mit einer Wellenlänge von 6,0 bis 14 µm, und/oder einer Strahlstärke von 6-11 NM, vorzugsweise 6 bis 10 NM,
- Erwärmung des Innenraums einer mobilen Toilette, durch emissionsarme Ferninfrarot Strahlwärme, z.B. mit einer Wellenlänge von 6,0 bis 14 µm, und/oder einer Strahlstärke von 6-11 NM, vorzugsweise 6 bis 10 NM, durch den Einsatz eines Ferninfrarotheizpaneels zum Schutz vor Kälte und zur Einhaltung der neuen Heizverordnung bei mobilen WC-Anlagen, wie mobilen Toiletten,
- Erwärmung des Toilettensitz / Toilettenbrille in einer mobilen Toilette, wie in anderen sanitären Einrichtungen durch von Strahlwärme, durch den Einsatz von emissionsarmen Ferninfrarotheizmatten in vorbestimmten Ferninfrarotbereich, z.B. mit einer Wellenlänge von 6,0 bis 14 µm, und/oder einer Strahlstärke von 6-11 NM, vorzugsweise 6 bis 10 NM,
- Einsatz bei Mobilheimen und Caravans, Gartenhäuschen, Wintergärten, Booten und Schiffen zur Erwärmung des Innenraums durch emissionsarme Strahlwärme im vorbestimmten Ferninfrarot mit einer Strahlstärke von 6-11 NM, vorzugsweise 6 bis 10 NM,
- Verwendung der emissionsarmen Ferninfrarot Strahlwärme, z.B. mit einer Strahlstärke von 6-11 NM, vorzugsweise 6 bis 10 NM, im PKW Sitzbereich und im allgemeinen PKW Bereich und im Motorraum als Vorwärmheizung.

Weitere Verwendungen mit Ferninfrarot- / Infrarotheizmatte/Heizelementen im vorbestimmten Wellenlängenbereich, z.B. mit einer Strahlstärke von 6-11 NM, vorzugsweise 6 bis 10 NM, zum Schutz vor Kälte können sein:
in Sitzmatten, in Sitzkissen, in Sofa, im Bereich der Küche, Bürotische, Gastronomiemöbel, wie Tresen, Theke, Hochtische, Esstische.
- zur Erwärmung des Raums über den Fußboden unter Beton, sowie unter Holz,
- zur Erwärmung des Raums über die Wände unter dem Putz,
- zur Erwärmung von Feuchträumen zur Trocknung von Wänden, zum Schutz vor Schimmelbildung und zum Aushärten von Beton- und Mauerwerken durch Einsatz von Ferninfrarotstrahlheizpaneelen, z.B. mit einer Strahlstärke von 6-11 NM, vorzugsweise 6 bis 10 NM"
- zur Erwärmung von Schwimmhallen, Schwimmbädern, Swimmingpools durch Einsatz von Ferninfrarot Strahlheizungspaneele und Strahlheizmatten unter Fliesen und/oder Beton im Wasserbereich und im Außenbereich des Wassers zum Schutz vor Kälte,
- zum Schutz vor Frost bei Swimmingpool im Außenbereich, wie im Innenbereich durch Einsatz von Ferninfrarotheizmatten/Elementen unter Fliese oder unter Beton durch Strahlwärme im vorbestimmten Wellenlängenbereich, z.B. mit einer Strahlstärke von 6-11 NM, vorzugsweise 6 bis 10 NM,
- zur Erwärmung durch Strahlwärme von Katzendecken/-Kissen und Hundedecken/- Kissen und Decken für den Menschen in vorbestimmten Ferninfrarot Wellenlängenbereich, z.B. mit einer Wellenlänge von 6,0 bis 14 µm, und/oder einer Strahlstärke von 6-11 NM, vorzugsweise 6 bis 10 NM, zum Schutz vor Kälte und für angenehmes Wohlbefinden,
- zum Schutz vor Kälte bei Hundefreihaltung und Zwingerhaltung durch Einsatz von Strahlwärme durch Ferninfrarotheizpaneele im vorbestimmten Wellenlängenbereich, z.B. mit einer Wellenlänge von 6,0 bis 14 µm, und/oder einer Strahlstärke von 6-11 NM, vorzugsweise 6 bis 10 NM,
- zum Schutz vor Frost bei Wasserspeicheranlagen und Wasserspeicherheizanlagen durch Einsatz von Ferninfrarotheizmatten in vorbestimmten Wellenlängenbereich, z.B. mit einer Wellenlänge von 6,0 bis 14 µm, und/oder einer Strahlstärke von 6-11 NM, vorzugsweise 6 bis 10 NM,
- zum Schutz vor Kälte bei Babywickeltischen, Wickeltischheizmatte und als Babymatratzenheizung durch Einsatz der sicheren Ferninfrarotstrahlwärme mit Ferninfrarotstrahlheizpaneele und Ferninfrarotheizmatten als Strahlwärme in vorbestimmten Wellenlängenbereich, z.B. mit einer Wellenlänge von 6,0 bis 14 µm, und/oder einer Strahlstärke von 6-11 NM, vorzugsweise 6 bis 10 NM,
- zur Anwendung bei Rheuma und Orthopädischen/Physiotherapeutischen Behandlungszwecken durch angenehme und gesunde Strahlwärme durch Ferninfrarotheizpaneel in vorbestimmten Wellenlängenbereich von3-15 µm, denn die vom Heizpaneel absorbierte Wärme wird vom Körper aufgenommen und als schmerzlindernd und angenehm empfunden,
- zur Anwendung als Allergieheizung durch angewandte Ferninfrarotstrahlheizwärme durch Ferninfrarotheizpaneele in vorbestimmten Wellenlängenbereich, z.B. mit einer Wellenlänge von 6,0 bis 14 µm, und/oder einer Strahlstärke von 6-11 NM, vorzugsweise 6 bis 10 NM,

Vorteil gegenüber konventionelle Heizung ist, dass die Heizung nicht über Luft übertragen wird, sondern über Gegenstände und Objekte im Raum und somit kein Staub in die Luftbahn im Raum bringt.
- zur Anwendung bei Abtauanlagen durch Anwendung der Strahlwärme im vorbestimmten Ferninfrarot Wellenlängenbereich, z.B. mit einer Wellenlänge von 6,0 bis 14 µm, und/oder einer Strahlstärke von 6-11 NM, vorzugsweise 6 bis 10 NM, durch Einsatz von Ferninfrarot Heizpaneelen.
- im Einsatz Ferninfrarotheizpaneelen, wie Ferninfrarotheizmatten im Bereich von Aquaristik / Terraristik zur Erwärmung der Umgebung durch Ferninfrarotstrahlwärme im vorbestimmten Ferninfrarot Wellenlängenbereich, z.B. mit einer Wellenlänge von 6,0 bis 14 µm, und/oder einer Strahlstärke von 6-11 NM, vorzugsweise 6 bis 10 NM,.

Die erfindungsgemäße Infrarotflächenheizanordnung für vielseitige Einsatzmöglichkeiten mit einem Rahmen zur Aufnahme und zur Befestigung einer Infrarotflächenheizung an mindestens einer Wand, Tür und / oder an einer Decke von Räumlichkeiten, insbesondere von sanitären Anlagen, und / oder Behältern, welche seitliche Wände als Rahmen, eine Frontwand und / oder eine Rückwand aufweist, ist dadurch gekennzeichnet, dass
auf der der Rückwand, z.B. der ersten Lage, zugewandten rückwärtigen Seite der Frontwand, z.B. der dritten Lage, ein elektrisches Infrarotflächenelement als Infrarotflächenheizung angeordnet und /oder in der Frontwand eingelassen ist,
gegen die Rückwand Befestigungsstreben oder Befestigungsstellen angesetzt sind,
das elektrische Infrarotflächenelement infrarote Strahlen mit einer Wellenlänge in einem Ferninfrarotbereich, in dem Bereich 5 bis 200 µm aussendet.

Die erfindungsgemäße Infrarotflächenheizanordnung kann elastisch oder starr ausgebildet sein, wobei die seitlichen Wände, z.B. die zweite und/oder die vierte Lage, die Frontwand, z.B. die dritte Lage, und / oder die Rückwand, z.B. die erste Lage, elastisch oder starr ausgebildet ist. Das elektrische Infrarotflächenelement, z.B. als ein flächenförmiger Infrarotstrahler ausgestaltet, ist. kann als Ferninfrarot-Strahler ausgebildet sein, beispielsweise mit einer Heizleistung von 100 bis 1.200 Watt, vorzugsweise 500 bis 800 Watt, noch mehr bevorzugt 600 bis 700 Watt. Der flächenförmige Infrarotstrahler kann auf der der Rückwand zugewandten Seite der Frontwand angeordnet und/ oder in der Frontwand als elektrische Infrarotflächenelement eingelassen sein. Der Rahmen und/oder die seitlichen Wände können U-förmig mit zwei Schenkeln und einem die beiden Schenkel verbindenden Abschnitt ausgebildet sein. Auch ist es möglich, dass die seitlichen Wände mit unterschiedlich dicken Schenkeln ausgestaltet sind. Bevorzugterweise enthalten die Frontwand und / oder die Rückwand ein kunststoffartiges Material, vorzugsweise ein Material mit einer Polyethylen-Verbindung. Die der Rückwand abgewandten vorderseitigen Schenkel der seitlichen Wände oder des Rahmens können als eine umlaufende Lateralblende zum Umgreifen der Frontwand ausgestaltet sein. Die Dicke der den vorderseitigen Schenkeln abgewandten rückwärtigen Schenkel können mit der Dicke der Befestigungsstreben übereinstimmen. In einer Ausgestaltung der erfindungsgemäßen Infrarotflächenheizanordnung ist das elektrische Infrarotflächenelement mittels eines elektronischen Raumtemperaturreglers, eines Witterungsfühlers, handbetätigbaren Ein/Aus-Schalter und/ oder eines Bewegungsmelders angesteuert.

Die erfindungsgemäße sanitäre Anlagen, insbesondere transportable, vorzugsweise fahrbare, WC-Anlagen, umfassen eine Kabine mit einem Toilettensitz, einem Bewegungsmelder und einer gegen eine Wand und / oder Tür angesetzte Infrarotflächenheizanordnung, wobei der Bewegungsmelder einen Ein/Aus-Schalter anzusteuern vermag und der Ein/Aus-Schalter in der Ein-Stellung die Infrarotflächenheizanordnung mit elektrischem Strom zur Ausstrahlung von Ferninfrarotstrahlen versorgt ist. Bei dem Übergang des Ein/Aus-Schalters von der Ein-Stellung in die Aus-Stellung wird die Versorgung der Infrarotflächenheizanordnung mit elektrischem Stromversorgung unterbrochen.. Die erfindungsgemäße Wasch-Anlage, welche eine Kabine mit einem Toilettensitz, einem Bewegungsmelder und einer gegen eine Wand und / oder Tür angesetzte Infrarotflächenheizanordnung umfasst, steuert der Bewegungsmelder den Ein/Aus-Schalter an, versorgt der Ein/Aus-Schalter in der Ein-Stellung die Infrarotflächenheizanordnung mit elektrischem Strom zur Ausstrahlung von Ferninfrarotstrahlen, vorzugsweise wird bei dem Übergang des Ein/Aus-Schalters von der Ein-Stellung in die Aus-Stellung die Versorgung der Infrarotflächenheizanordnung mit elektrischem Stromversorgung unterbrochen. Die erfindungsgemäße Infrarotflächenheizanordnung findet Verwendung in Toilettenbrillen, Toilettendeckeln, Mobilfunktelefonen, Autowaschanlagen, Laderampen, in einem rückwärtigen Bereich von Lastkraftwagen, Bodenpaneelen, Abtauanlagen von Kühlhäusern und / oder Winterfrostschutzanlagen und / oder als Unter-Tisch-Heizung und / oder Fußbodenheizung,

Die erfindungsgemäße Infrarotflächenheizanordnung umfasst nicht brennbare Materialien oder nur schwer entflammbare Materialien, die zu Lagen ausgebildet sein können. Die erfindungsgemäße Infrarotflächenheizanordnung und deren Lagen können einen Kunststoff, beispielsweise ein, vorzugsweise expandierbares, Polystyrol-Polymer, wie Styropor, enthalten; ein solcher Kunststoff mit Polystyrole-Polymere kann schwer entflammbar und /oder beständig sein. Auch kann in einer weiteren Ausgestaltung der erfindungsgemäßen Infrarotflächenheizanordnung ein feuerhemmendes Material, wie die vorgenannten oder nachfolgend aufgeführten, enthalten sein. Als schwer brennbare oder nicht entflammbare Materialien für die Lagen eignen sich Glaswolle, Mineralfasern, z.B. Stein-, Gesteins-, Basaltwolle, Schlackenfasern, Kieselgur, Perlite, Vermikulite, und Mischungen derselben. Solche Materialien in den Lagen zeichnen sich zudem durch ihren besonders zuverlässigen Schutz vor Brand, Schwelbrand und Feuchtigkeit, insbesondere bei schwankenden thermischen Bedingungen.

Als schwer brennbare oder nicht entflammbare Materialien für die Lagen können auch solche Kunststoffe mit einem Feuerschutzmittel, auch Flammschutzmittel genannt, verwendet werden, deren Zündzeit der Kunststoffe wirksam verlängert ist, wenn sie durch einen Brandherd angegriffen werden, oder in der Lage sind, Feuer von selbst verlöschen zu lassen, so dass das Ausbreiten des Brandherdes wirksam unterbunden, verzögert oder gar beendet werden kann, so dass die feuerhemmende Wirkung eintritt. Zur Flammfestigkeit können als schwer entflammbare oder feuerhemmende Materialien eignen sich Kunststoffe, wie Polymere mit einem Halogen-Gehalt, z.B. PTFE, die zudem selbstverlöschend zu wirken vermögen. Im Sinne der Erfindung wird unter Flammfestigkeit auch die Feuerhemmung verstanden.

Das Zusammenwirken der Bauteile der erfindungsgemäßen Infrarotflächenheizanordnung stellt bereit
die ubiquitäre Verwendbarkeit derselben ist ohne wesentliche bauliche Änderungen an unterschiedlichsten Örtlichkeiten,
den Einsatz in sanitären Anlagen mit Unterdrückung des Austausches oder Vermischung kostenträchtig erwärmter Umgebungsluft mit bzw. durch die kalte Außenluft,
die Unabhängigkeit von sanitären Anlagen von der Anschlussmöglichkeit an das öffentliche Stromnetz durch in WC-Anlagen gelagertem Stromspeicher,
die leichte Montage mittels Befestigungsstreben und /oder Befestigungsstellen,
das optisch ansprechende Äußere,
die Diebstahlsicherung mittels Snap-In-Verschlüssen,
das gleichmäßig flächige Verteilen der Ferninfrarotstrahlung,
die Steigerung des Wohlbefindens des Benutzers, beispielsweise in WC-Anlagen oder Wasch-Anlagen,
den kostengünstigen betrieb,
die den geringen Aufwand an Wartung und Kontrolle,
die nachhaltige Schonung und den umweltbewussten Umgang mit begrenzten Energiereserven,
den geringen Verbrauch an elektrischem Strom,
die Vermeidung von zur Erzeugung des elektrischen Stroms auftretenden Immissionen,
die leichte Herstellbarkeit,
den geringen Verbrauch wiederverwendbarer Werkstoffen,
die Verringerung der Kosten für die Entsorgung beschädigter Infrarotflächenheizanordnung,
die Erfüllung gesetzlicher Vorschriften für transportable WC-Anlagen,
die erleichterte Reinigung und die dauerhafte Aufrechterhaltung der Hygienevorschriften in transportablen WC-Anlagen
sowie
Einsatz auch in großen Räumlichkeiten zur gezielten und punktuellen Aufheizung.

### Ausführungsbeispiele

Die Zeichnungen zeigen aufgrund einer zeichnerischen Vereinfachung in schematischer, stark vergrößerter Weise, ohne Anspruch auf eine maßstabsgetreue Wiedergabe in
Fig. 1: in der oberen Zeichnung die Frontansicht auf die erfindungsgemäße Infrarotflächenheizanordnung und in der unteren Zeichnung die Seitenansicht auf die teilkreisgebogen ausgestaltete Infrarotflächenheizanordnung,
Fig. 2: in der oberen Zeichnung die Schrägansicht auf die erfindungsgemäße Infrarotflächenheizanordnung mit Durchbrüchen und in der unteren Zeichnung den Schnitt A-A gemäß oberer Zeichnung
Fig. 3: in der oberen Zeichnung die Schrägansicht auf die erfindungsgemäße Infrarotflächenheizanordnung und in der unteren Zeichnung den Schnitt A-A gemäß oberer Zeichnung
Fig. 4: in der oberen Zeichnung eine Schrägansicht auf die erfindungsgemäße Infrarotflächenheizanordnung und in der unteren Zeichnung den Schnitt A-A gemäß oberer Zeichnung,
Fig. 5: in der oberen Zeichnung die Schrägansicht auf die erfindungsgemäße Infrarotflächenheizanordnung und in der unteren Zeichnung den Schnitt A-A gemäß oberer Zeichnung mit Keramikplatten aufweisenden Lagen,
Fig. 6: in der oberen Zeichnung eine Schrägansicht auf die erfindungsgemäße Infrarotflächenheizanordnung und in der unteren Zeichnung den Schnitt A-A die einen Aluminium-Werkstoff aufweisende erste Lage als Rückwand
   und
Fig. 7: in der oberen Zeichnung die Draufsicht auf die erfindungsgemäße Infrarotflächenheizanordnung und in der unteren Zeichnung den Schnitt A-A gemäß oberer Zeichnung.

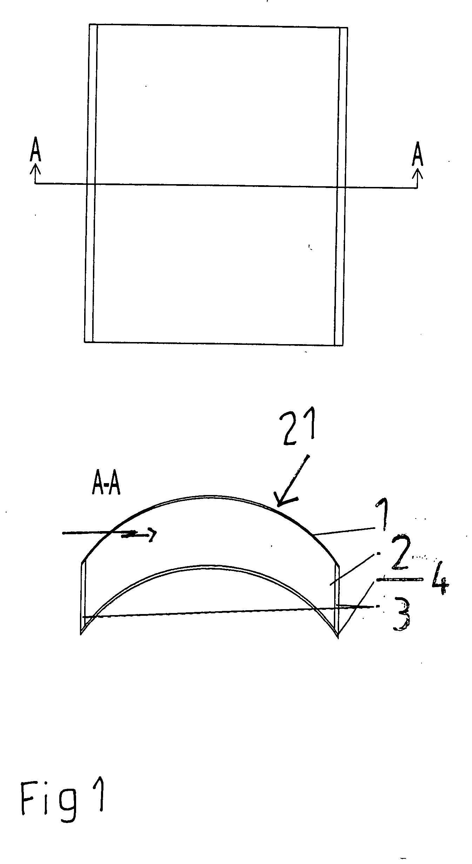

In einem Ausführungsbeispiel ist die erfindungsgemäße Infrarotflächenheizanordnung viertelkreisbogenförmig ausgebildet (Fig. 1). Die Rückwand als erste Lage 1 weist einen Aluminium-Werkstoff auf. Die zweite Lage 2, die als Werkstoff eine Polyurethan-Verbindung aufweist, ist Fläche auf Fläche gegen die erste Lage 1 angesetzt, wobei auch gleichzeitig die dritte Lage 4 Fläche auf Fläche gegen die zweite Lage 2 angesetzt ist. Auf der dritten Lage ist auf der der zweiten Lage zugewandten Seite das mattenförmige elektrische Infrarotflächenelement als sogenannte Heizmatte aufgeklebt. Die Lagen 1, 2, 4 sind miteinander verklebt mittels herkömmlichen doppelseitig klebenden Klebebändern 5; die in den Bereichen der Ränder 21 angeordnet sind.

Ein um die Ränder 21 der erfindungsgemäßen Infrarotflächenheizanordnung umlaufender Rahmen 4 unterstützt die Lagesicherheit der Lagen zueinander und die Formstabilität derselben.

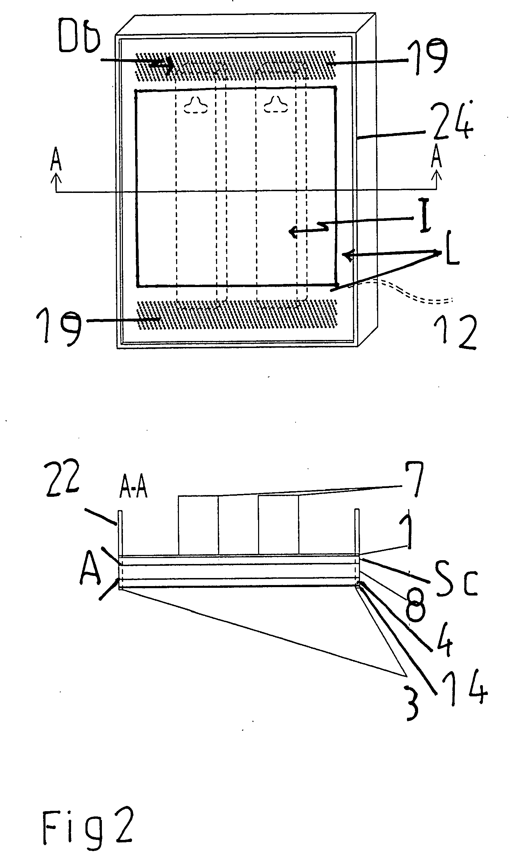

In einem weiteren Ausführungsbeispiel weist die erste Lage 1 gleichfalls einen Aluminium-Werkstoff, z.B. ein Aluminium-Blech, auf (Fig. 2), welches rückseitig verkleidet ist. Von der ersten Lage 1 ist die Lage 3 beabstandet angeordnet unter Bildung eines Freiraums 8. Auf der der dritten Lage 4 zugewandten Seite der ersten Lage 1 ist eine Folie 5c zur Reflektion der Ferninfrarotstrahlen bzw. Wärmestrahlen Fläche auf Fläche angeordnet oder aufgedruckt. Die dritte Lage 4 weist als Werkstoff eine Polyethylenterephthalat-Verbindung auf. Auf dieser Lage 4 mit dem kunststoffartigen Material ist mithilfe von herkömmlichen doppelseitigen Klebebändern das als Heizmatte ausgebildete Infrarotflächenelement dauerhaft angeklebt oder eingelassen, welches über ein Kabel 12 mit elektrischen Strom versorgt ist. Gegen die dritte Lage 4 ist eine vierte Lage 14 Fläche auf Fläche angesetzt, die beispielsweise durchsichtig ist und aus Glas hergestellt ist oder ein Aluminium-Blech sein kann. Die erfindungsgemäße Infrarotflächenheizanordnung weist einen umlaufenden Rahmen 3 auf, in dessen von den beiden Schenkeln und den die beiden Schenkeln verbindenden Abschnitt die Ränder 21 der Lagen 21, 2 4 und Folie 5c eingelassen sind und der Erhöhung der Formstabilität und Lagesicherheit der Lagen 1, 2 4 zueinander dienen. Die Durchbrüche 19 sind von dem oberen Rand 21 und dem unteren Rand 21 gleich beabstandet und weisen übereinstimmende Flächen Db auf. Ebenfalls sind die Durchbrüche 19 von den beiden gegenüberliegenden Seiten 24 gleich beabstandet.

Das Verhältnis L/I der Gesamtfläche L der dritten Lage 4 zu der Fläche I der Durchbrüche 19 beträgt in verschiedenen Ausführungsbeispielen 1,1, 1,2, 1,4 oder 5,0. Unter der Gesamtfläche L der dritten Lage 4 kann im Sinne der Erfindung diejenige Fläche auch verstanden werden, die die Fläche des flächenförmig ausgebildeten Infrarotflächenelementes einschließt, Unter Fläche I des Infrarotflächenelementes wird im Sinne der Erfindung auch diejenige Fläche verstanden, welche nur die der Matte oder Heizmatte einnimmt.

Das Verhältnis SD/A der Gesamtdicke SD zu dem Abstand A der dritten Lage 4 von der ersten Lage 1 beträgt 1,7 oder 2,3 oder 5,5 oder 7,3 oder 16,25. Unter Gesamtdicke SD oder x-SD kann auch im Sinne der Erfindung verstanden werden die Summe aus der Dicke D der dritten Lage 4 und der Dicke D der ersten Lage 1 sowie dem Abstand der dritten Lage 4 von der ersten Lage 1 zur Bildung des Freiraums 8. Das Verhältnis L/Db der Gesamtfläche L der dritten Lage 4 zu der Fläche Db der Durchbrüche 19 der dritten Lage 4 liegt im Bereich von 6,0 oder 93,5. Unter Fläche Db der Durchbrüche 19 der dritten Lage 4 kann man verstehen die Gesamtfläche der beiden Durchbrüche 19 einer dritten Lage 4.

An der Rückseite der ersten Lage 1, die der dritten Lage 4 abgewandt ist, sind Befestigungsstreben 7 angeordnet, die zur Kopplung der erfindungsgemäßen Infrarotflächenheizanordnung an Wänden dienen. Um die Lagesicherheit der erfindungsgemäßen Infrarotflächenheizanordnung an Wänden zu unterstützen, sind zusätzlich, sowie aus ästhetischen bzw. optischen Gründen, Sichtblenden 22 zu beiden Seiten der Rückseite der ersten Lage 1 der Infrarotflächenheizanordnung angeordnet. Zusätzlich sind die Lagen 1, 3, soweit sie flächig aufeinander liegen sind, mit herkömmlichen doppelseitigen Klebebändern 15, 5 zusätzlich miteinander verbunden und sind die Ränder 21 in einem Rahmen 3 geführt zwecks form-, reib- und/oder kraftschlüssiger Kopplung.

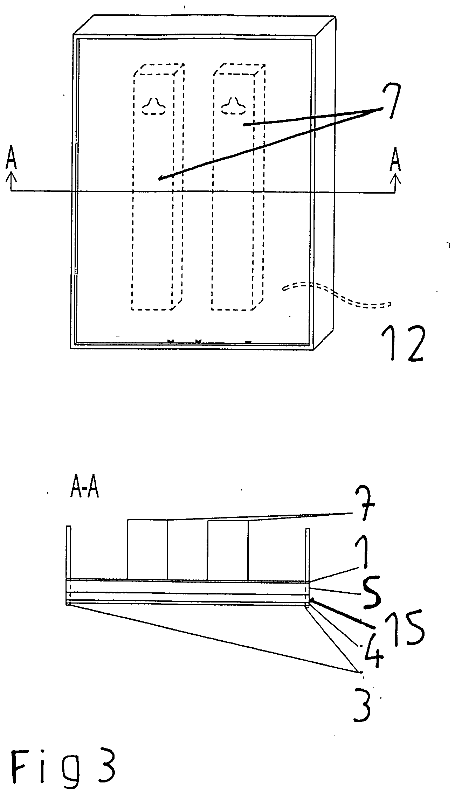

In einem zusätzlichen Ausführungsbeispiel sind wiederum an der Rückseite der ersten Lage 1 Sichtblenden 22 und Befestigungsstreben 7 angeordnet (Fig. 3). Die erste Lage 1, einen Aluminium-Werkstoff enthaltend, ist gegen die zweite Lage 2, die einen Werkstoff mit einer Polyurethan-Verbindung aufweist, Fläche auf Fläche angesetzt und mittels doppelseitigem herkömmlichen Klebebändern 5, 15 verklebt. Die dritte Lage 4, welche gleichfalls die Heizmatte aufweist, ist gegen die zweite Lage 2 angesetzt und gleichfalls mit dieser mit dem doppelseitigen Klebeband 5, 15 verklebt. Der umlaufende Rahmen 3 trägt zur Formstabilität und auch zur Lagesicherheit und Unverschiebbarkeit der Lagen 1, 2 4 zueinander bei.

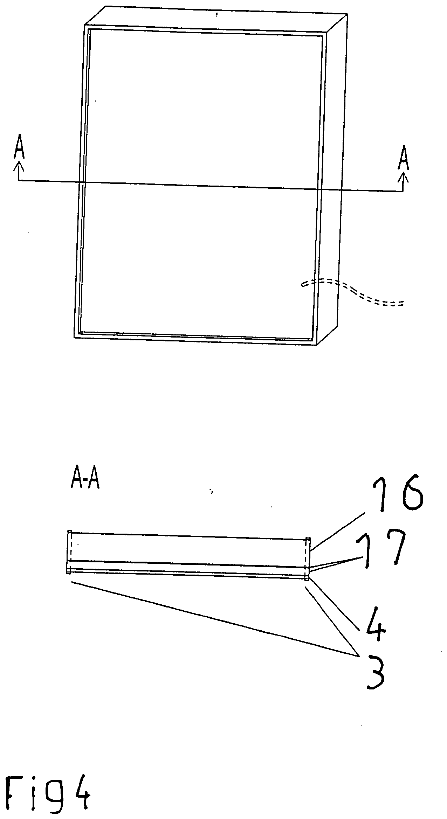

In einem anderen Ausführungsbeispiel (Fig. 4) ist die erste Lage mit einem Gips-Werkstoff als Rigips/Ferracell Platte hergestellt, wobei die Rückseite eine Folie, wie Polyvinylchlorid-Folie, aufweist. Auf der Seite der ersten Lage 1, die der Rückseite gegenüberliegt, ist eine Reflexionsfolie 17, die als Lage 2 bezeichnet werden kann, angeklebt zur Ab- pder Rückstrahlung der Wärme bzw. der Ferninfrarotstrahlen. Gegen die Reflexionsfolie 17 als Lage 2 ist die Lage 3 Fläche auf Fläche angesetzt 4 mit dem als Heizmatte ausgebildeten Infrarotflächenelement.

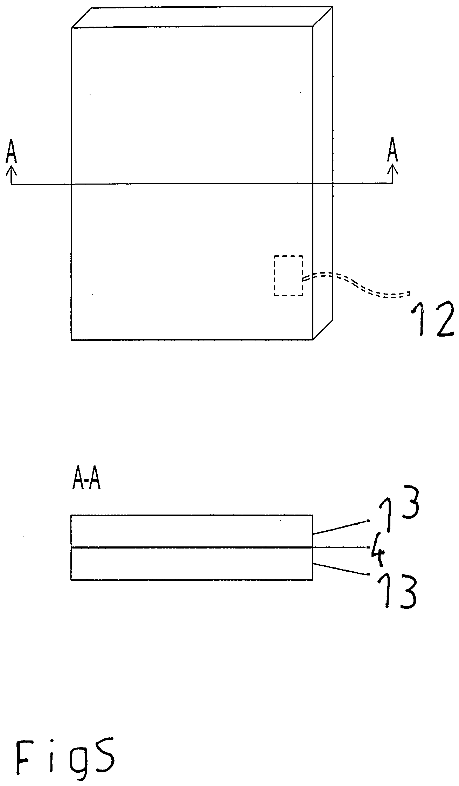

In einem zusätzlichen Ausführungsbeispiel (Fig. 5) sind die erste Lage 1 und die dritte Lage 4 als Platten mit einem Keramik-Werkstoff hergestellt, wobei zwischen den beiden das Lagen 1, 4 das als Heizmatte ausgebildete elektrische Infrarotflächenelement angeordnet ist. Die erste Lage 1 und die dritte Lage 4 sind miteinander mit den herkömmlichen doppelseitigen Klebebändern 5, 15 verbunden. In einem weiteren Ausführungsbeispiel ist die erste Lage 1 mit der e dritten Lage 4 mittels eines, z.B. in einer innenseitig angeordneten umlaufenden Nut, aufgebrachten Silikonklebers 5, 15, so fest verbunden, dass der die beiden Lagen 1, 4 überbrückende Spalt aus optischen Gründen zusätzlich mit Keramikpartikeln geschlossen wird.

In einem Ausführungsbeispiel kann die Dicke D der ersten Lage 1 und die Dicke D der dritten Lage 4 übereinstimmen. Die Dicke D der ersten Lage 1 ist der Abstand ihrer Rückseite von ihrer ihrer Rückseite gegenüberliegenden Seite. In sonstigen Ausführungsbeispielen sind die Dicken D der ersten Lage 1 zwei- bis viermal, hier zwei oder dreimal, größer als die Dicke D der dritten Lage 4.

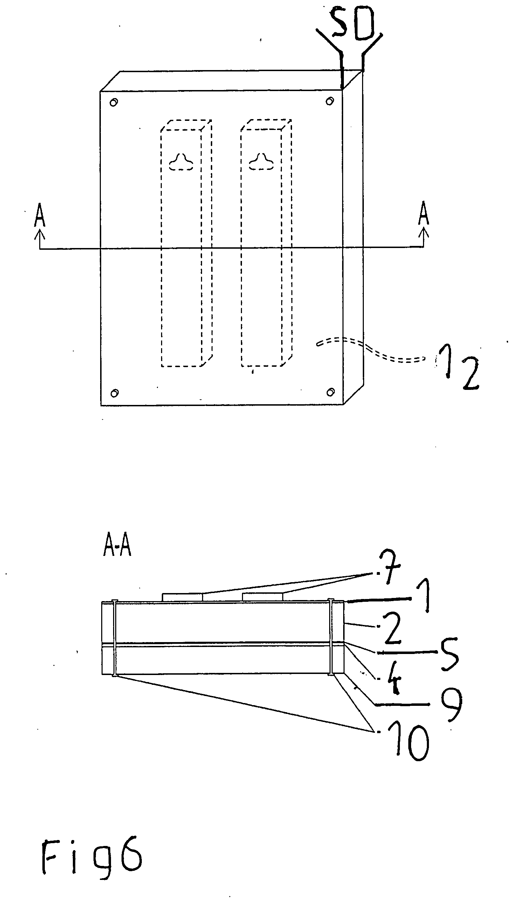

In einem weiteren Ausführungsbeispiel (Fig. 6) ist die erste Lage 1 mit einem Aluminium-Werkstoff als Platte mit Aluminium-Blech hergestellt bzw. mit solchem Aluminium-Werkstoff beschichtet. Gegen die erste Lage 1 ist die zweite Lage 2 Fläche auf Fläche angesetzt, welche aus einer Polyurethan-Verbindung hergestellt ist. Die dritte Lage 4 ist gegen die zweite Lage 2 ebenso flächig, also Fläche auf Fläche, angesetzt und mit dieser mittels einem doppelseitigem Klebeband verbunden, welche gleichfalls das als Heizmatte ausgebildete flächige elektrische Infrarotflächenelement aufweist. Als vierte Lage ist diese gegen die dritte Lage 4 gleichfalls flächig angesetzt, wobei die vierte Lage 14 transparent ist und mit einer Glasscheibe 9 ausgebildet ist. Zur Erhöhung der Stabilität und Lagesicherheit der Lagen zueinander werden diese von Schrauben 10 durchgriffen. Zusätzlich können die Ränder 21 der Lagen 1, 2, 4, 14 in einem Ausführungsbeispiel in einem umlaufenden Rahmen 3 form-, kraft- und/oder reibschlüssig im Eingriff gehalten sein Auf der Rückseite, die der Lage 2 abgewandt ist, sind wiederum Befestigungsstreben oder -stangen 7 angeordnet. Das elektrische Infrarotflächenelement wird mithilfe eines Netzkabels mit elektrischem Strom versorgt.angesteuert.

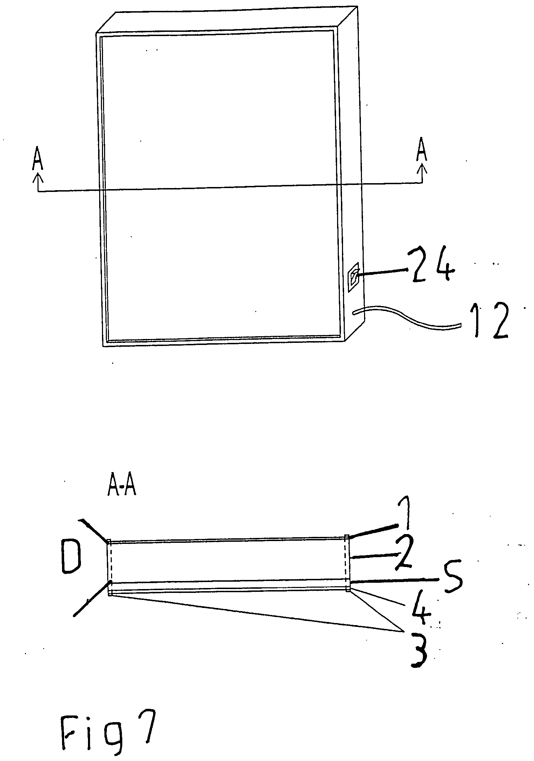

In einem Ausführungsbeispiel (Fig. 7) wird das elektrische Infrarotflächenelement über einen Netzschalter 24, der als Ein-/Ausschalter ausgebildet ist und von Hand bedient werden kann, angesteuert. Die Infrarotflächenheizanordnung weist als erste Lage 1 einen Aluminium-Werkstoff auf, wobei gegen die erste Lage 1 eine zweite Lage 2 als Platte mit Polyurethan-Verbindung hergestellt angesetzt ist. Gegen die zweite Lage 2 ist die dritte Lage 4 Fläche auf Fläche angesetzt und mit herkömmlichem doppelseitigen Klebeband 5, 15 lagesicher mit der zweiten Lage verbunden. Der umlaufende Rahmen 3 sichert die Formstabilität durch den form-, reib- und/oder kraftschlüssigen Eingriff der umlaufenden Ränder 21 der Lagen 1, 2, 4 in den Rahmen 3.

Die erfindungsgemäße Infrarotflächenheizanordnung besteht aus einem Rahmen mit vier seitlichen Wänden, einer Frontwand und einer Rückwand. An der der Rückwand zugewandten Seite der Frontwand ist eine Heizmatte zur Aussendung von Ferninfrarotstrahlen angeordnet. Die Rückwand bedeckt vollständig die rückwärtige Seite der Frontwand. Die Frontwand und die Rückwand sind mit einem kunststoffartigen Material mit Polyethylen-Verbindung hergestellt. Die seitlichen Wände des Rahmens der erfindungsgemäßen Infrarotflächenheizanordnung sind viereckig zueinander ausgerichtet. Die seitlichen Wände sind im Querschnitt U-förmig ausgebildet mit rückwärtigen Schenkeln, der eine größere Dicke aufweisen als die Schenkel, die der Frontwand zugewandt sind und die Frontwand form- und kraftschlüssig umgreifen. Der Schenkel mit der größeren Dicke umgreifen ebenso formschlüssig und kraftschlüssig die Rückwand. Die beiden Schenkel werden über einen Abschnitt miteinander verbunden. Durch das Umgreifen der Frontwand und der Rückwand durch die seitlichen Wände ist eine hinreichende Formstabilität der erfindungsgemäßen Infrarotflächenheizanordnung gewährleistet.

In einem weiteren Ausführungsbeispiel gibt es das Heizpaneel auch ohne Rahmen oder mit Rahmen, der bündig ist mit Vorder- und Rückseite. In einem anderen Ausführungsbeispiel gibt es des Weiteren das Paneel auch mit Befestigungsecken und ohne Schenkel.

An der Rückwand sind zwei Befestigungsstreben angeordnet. Die Befestigungsstreben weisen in ihrem oberen Bereich und in ihrem unteren Bereich Durchbrüche auf. Die Durchbrüche sind in der Draufsicht als Schlitz ausgebildet, der in dem oberen Randbereich zu einem kreisrunden Loch sich erweitert. Die Durchbrüche nehmen die in die Wand oder Tür oder unteren Boden der WC-Anlage eingetriebenen Schraubenköpfe zur Verbindung der erfindungsgemäßen Infrarotflächenheizanordnung mit der Wand der Kabine der WC-Anlage auf.

Die erfindungsgemäße Infrarotflächenheizanordnung sendet Ferninfrarotstrahlen im Bereich von 5 - 200 µm aus.

Das Infrarotflächenelement der erfindungsgemäßen Infrarotflächenheizanordnung hat eine Heizleistung von 300, 350, 450, 600, 720, 780 oder 1.200 Watt oder 100 bis 1200 Watt. Gerade der Einsatz der erfindungsgemäßen Infrarotflächenheizanordnung in der WC-Anlage ist besonders hygienisch aufgrund der leichten Abwaschbarkeit und oberflächlichen Desinfektion der erfindungsgemäßen Infrarotflächenheizanordnung. Hinzukommend strahlt die Infrarotflächenheizanordnung lediglich auf den Benutzer gleichmäßig flächig, ohne dass die Umgebungsluft in der Kabine der WC-Anlage erwärmt zu werden braucht.

Schon bei Betreten der erfindungsgemäßen WC-Anlage wird durch ein Bewegungsmelder ein Ein/Aus-Schalter aus der Aus-Stellung in die Ein-Stellung geschaltet, so dass das elektrische Infrarotflächenelement der erfindungsgemäßen Infrarotflächenheizanordnung mit elektrischem Strom versorgt wird. Bei dem Verlassen der erfindungsgemäßen WC-Anlage wird durch den Bewegungsmelder der Ein/Aus-Schalter aus der Ein-Stellung in die Aus-Stellung übergehen, so dass das elektrische Infrarotflächenelement nicht mehr mit elektrischem Strom versorgt wird.

Die erfindungsgemäße Infrarotflächenheizanordnung ermöglicht den elektrischen Strom verbrauchenden Betrieb nur zu einem Zeitraum, innerhalb welchem der Benutzer die WC-Anlage benutzt.

Dadurch sind die Kosten für den Betrieb der erfindungsgemäßen WC-Anlage sehr gering im Vergleich zu den herkömmlichen elektrischen Raumheizungen.

Ebenso erweist es sich von Vorteil, dass die erfindungsgemäße Infrarotflächenheizanordnung in der WC-Anlage die Brandgefahr deutlich herabsetzt, so dass die Personalkosten hervorrufende Kontrolle oder Aufsicht sich erübrigen.

Gleichfalls stellt keine durch übliche Konvektionsheizung sich einstellende Lufterwärmung und Bewegung derselben ein.

Auch ist die Leistung der erfindungsgemäßen Infrarotflächenheizanordnung in der WC-Anlage je nach Verhältnissen mittels Stufenschalter vorteilhafterweise selbsttätig oder manuell dimmbar.

Ebenso betreffen die Vorteile das Vermeiden von Luftzugerscheinungen in der WC-Anlage.

Besonders eignet sich als elektrisches Infrarotflächenelement ein Karbon-Krystal Ferninfrarotstrahler, z.B. mit einer Wellenlänge 4,0 bis 1.000 µm, vorzugsweise von 5,0 bis 1.000 µm, bevorzugterweise von 50,0 bis 1.000 µm, und/oder einer Strahlstärke von 6-11 NM, vorzugsweise 6 bis 10 NM,

Auch ist die Lebensdauer der erfindungsgemäßen Infrarotflächenheizanordnung in WC-Anlagen deutlich erhöht im Vergleich zu elektrischen Raumheizungen durch die Verwendung von belastbaren Kunststoffen und Heizungselementen.

Durch die Verarbeitung einfach beschaffbarer Werkstoffe sind die Herstellungskosten der erfindungsgemäßen Infrarotflächenheizanordnung in WC-Anlagen im Vergleich zum Stand der Technik drastisch gesenkt.

Es zeigt sich durch die geschickte Kombination von einfach bereitzustellenden Materialien aus Polyethylen-Kunststoffen, der Verwendung eines elektrischen Infrarotflächenelementes als Ferninfrarot-Strahler, z.B. aus Carbon Krystal, und eines Rahmens mit seitlichen Wänden, Frontwand und Rückwand, dass die einzelnen Bauteile der erfindungsgemäßen Infrarotflächenheizanordnung derart geschickt zusammenwirken, dass die Vorteile unerwartet sind und die erfindungsgemäße Infrarotflächenheizanordnung sich für den ubiquitären Einsatz in den verschiedensten Anlagen, Geräten und zu unterschiedlichsten Zwecken besonders eignet.

Schließlich erfüllt die erfindungsgemäße Infrarotflächenheizanordnung in WC-Anlagen in nahezu idealerweise die gesetzlichen Bestimmungen der Beheizung derselben

## Patentansprüche

1. Infrarotflächenheizanordnung mit einem elektrischen Infrarotflächenelement als Infrarotflächenheizung in einem Ferninfrarotbereich von 5 bis 200 µm mit einer ersten Lage (1) als Rückwand zur Wärmeisolierung,
einer zweiten Lage (2), welche ein eine Polyurethan-Verbindung enthaltendes kunststoffartiges Material enthält und als eine reflektierende Beschichtung ausgestaltet ist, und
einer dritten Lage (4), die das elektrische Infrarotflächenelement als Heizmatte aufweist, welche ein eine Polyethylentherephthalat-Verbindung enthaltendes kunststoffartiges Material enthält,
**dadurch gekennzeichnet, dass**
die dritte Lage (4) in ihren oberen und ihrem unteren Bereichen Durchbrüche (19) aufweist, die dritte Lage (4) von der zweiten Lage (2) beabstandet ist,
das Verhältnis (L/I) der Gesamtfläche (L) der dritten Lage (4) zu der Fläche (I) des Infrarotflächenelements 1,1 bis 6,0 beträgt,
das Verhältnis (L/Db) der Gesamtfläche (L) der dritten Lage (4) zu der Fläche (Db) der Durchbrüche (19) der dritten Lage (4) im Bereich von 6,0 bis 16,3 liegt,
das Infrarotflächenelement eine Heizleistung von 100 bis 1200 W aufweist.

2. Infrarotflächenheizanordnung nach Anspruch 1, **dadurch gekennzeichnet, dass** der Ferninfrarotbereich 6 bis 15 µm, noch mehr bevorzugt 6 bis 14 µm oder 7 bis 11 µm oder 8 bis 15 µm beträgt.

3. Infrarotflächenheizanordnung nach Anspruch 1 oder 2, **dadurch gekennzeichnet, dass** das Verhältnis (SD/A) der Gesamtdicke (SD) zu dem Abstand (A) der dritten Lage (4) von der ersten Lage (1) 1,5 bis 20,0, vorzugsweise 2,0 bis 17,0, beträgt.

4. Infrarotflächenheizanordnung nach Anspruch 3, **dadurch gekennzeichnet, dass** das Verhältnis (SD/A) der Gesamtdicke (SD) zu dem Abstand (A) der dritten Lage (4) von der ersten Lage (1) 1,7 oder 2,3 oder 5,5 oder 7,3 oder 16,25 oder 16,3 beträgt.

5. Infrarotflächenheizanordnung nach mindestens einem der Ansprüche 1 bis 4, **dadurch gekennzeichnet, dass** das Verhältnis (x-SD/A) der Gesamtdicke (SD) zu dem Abstand (A) der dritten Lage (4) von der zweiten Lage (2) 5,0 bis 13,0, vorzugsweise 6,6 bis 11,5, beträgt.

6. Infrarotflächenheizanordnung nach Anspruch 5, **dadurch gekennzeichnet, dass** das Verhältnis (x-SD/A) der Gesamtdicke (SD) zu dem Abstand (A) der dritten Lage (4) von der zweiten Lage (2) 6,6 oder 11,5, beträgt.

7. Infrarotflächenheizanordnung nach mindestens einem der Ansprüche 1 bis 6, **dadurch gekennzeichnet, dass** das Verhältnis (L/Db) der Gesamtfläche (L) der dritten Lage (4) zu der Fläche (Db) der Durchbrüche (19) der dritten Lage (4) im Bereich 6,0 bis 9,35 liegt.

8. Infrarotflächenheizanordnung nach Anspruch 7, **dadurch gekennzeichnet, dass** das Verhältnis (L/Db) der Gesamtfläche (L) der dritten Lage (4) zu der Fläche (Db) der Durchbrüche (19) der dritten Lage (4) 6,0 oder 9,35 beträgt.

9. Infrarotflächenheizanordnung nach mindestens einem der Ansprüche 1 bis 8, **dadurch gekennzeichnet, dass** eine vierte Lage (14) an der dritten Lage (4) angeordnet ist, vorzugsweise in ihren oberen und ihrem unteren Bereichen Durchbrüche (19) aufweist sowie von der dritten Lage (4) beabstandet ist.

10. Infrarotflächenheizanordnung nach Anspruch 9, **gekennzeichnet durch** das Anliegen der vierten Lage (14) an der dritten Lage (4) Fläche auf Fläche.

11. Infrarotflächenheizanordnung nach mindestens einem der Ansprüche 1 bis 10, **dadurch gekennzeichnet, dass** die erste Lage (1) als Rückwand einen Werkstoff mit einer Aluminium-Verbindung und /oder einen Blech, Keramik und/ oder Gips enthaltenden Werkstoff enthält.

12. Infrarotflächenheizanordnung nach mindestens einem der Ansprüche 1 bis 11, **dadurch gekennzeichnet, dass** die dritte Lage (4) und / oder vierte Lage (14) eine Polyethylen-Verbindung, eine Polyurethan-Verbindung, Aluminium, Glas und/oder Keramik enthaltende Materialien aufweisen.

13. Infrarotflächenheizanordnung nach mindestens einem der Ansprüche 1 bis 12, **dadurch gekennzeichnet, dass** die Lagen (2, 3, 4, 14) einander verklebt und/oder deren Ränder (22) in einem im Querschnitt U-förmigen, vorzugsweise umlaufenden, Rahmen form-, reib- und/oder kraftschlüssig gehalten sind.

14. Infrarotflächenheizanordnung nach mindestens einem der Ansprüche 1 bis 13, **dadurch gekennzeichnet, dass** das Infrarotflächenelement eine Heizleistung von 130 W, 300 W, 360 W, 450 W, 540 W, 600 W, 1000 W oder 1200 W aufweist.

15. Infrarotflächenheizanordnung nach mindestens einem der Ansprüche 1 bis 13, **dadurch gekennzeichnet, dass** das Infrarotflächenelement eine Heizleistung von 100 W bis 130 W aufweist.

16. Infrarotflächenheizanordnung nach mindestens einem der Ansprüche 1 bis 15, **dadurch gekennzeichnet, dass** an der Rückseite der ersten Lage (1) Streben (7) zum Ansetzen gegen eine Wand oder Decke angeordnet sind.

17. Verwendung der Infrarotflächenheizanordnung nach mindestens einem der Ansprüche 1 bis 16 in sanitären Anlagen, insbesondere transportablen, vorzugsweise fahrbaren, WC-Anlagen, Toilettenbrillen, Toilettendeckeln, Mobilfunktelefonen, Autowaschanlagen, Laderampen, in einem rückwärtigen Bereich von Lastkraftwagen, Bodenpaneelen, Abtauanlagen von Kühlhäusern und / oder Winterfrostschutzanlagen und / oder als Unter-Tisch-Heizung und / oder Fußbodenheizung.

## Claims

1. An infrared surface heating assembly with an electrical infrared surface element as infrared surface heating in a far infrared range from 5 to 200 µm with
a first layer (1) as a rear wall for heat insulation,
a second layer (2) which contains a plastic-type material containing a polyurethane compound and is formed as a reflective coating, and
a third layer (4) which has the electrical infrared surface element as a heating pad which contains a plastic-type material containing a polyethylene terephthalate compound,
**characterised in that**
the third layer (4) has perforations (19) in its upper and lower regions,
the third layer (4) is spaced apart from the second layer (2),
the ratio (L/I) of the overall surface (L) of the third layer (4) to the surface (I) of the infrared surface element is 1.1 to 6.0,
the ratio (L/Db) of the overall surface (L) of the third layer (4) to the surface (Db) of the perforations (19) in the third layer (4) is in the range from 6.0 to 16.3,
the infrared surface element has a heat output of 100 to 1200 W.

2. The infrared surface heating assembly according to Claim 1, **characterised in that** the far infrared range is 6 to 15 µm, more preferably 6 to 14 µm or 7 to 11 µm or 8 to 15 µm.

3. The infrared surface heating assembly according to Claim 1 or 2, **characterised in that** the ratio (SD/A) of the overall thickness (SD) to the spacing (A) of the third layer (4) from the first layer (1) is 1.5 to 20.0, preferably 2.0 to 17.0.

4. The infrared surface heating assembly according to Claim 3, **characterised in that** the ratio (SD/A) of the overall thickness (SD) to the spacing (A) of the third layer (4) from the first layer (1) is 1.7 or 2.3 or 5.5 or 7.3 or 16.25 or 16.3.

5. The infrared surface heating assembly according to at least one of Claims 1 to 4, **characterised in that** the ratio (x-SD/A) of the overall thickness (SD) to the spacing (A) of the third layer (4) from the second layer (2) is 5.0 to 13.0, preferably 6.6 to 11.5.

6. The infrared surface heating assembly according to Claim 5, **characterised in that** the ratio (x-SD/A) of the overall thickness (SD) to the spacing (A) of the third layer (4) from the second layer (2) is 6.6 or 11.5.

7. The infrared surface heating assembly according to at least one of Claims 1 to 6, **characterised in that** the ratio (L/Db) of the overall surface (L) of the third layer (4) to the surface (Db) of the perforations (19) in the third layer (4) is in the range from 6.0 to 9.35.

8. The infrared surface heating assembly according to Claim 7, **characterised in that** the ratio (L/Db) of the overall surface (L) of the third layer (4) to the surface (Db) of the perforations (19) in the third layer (4) is 6.0 or 9.35.

9. The infrared surface heating assembly according to at least one of Claims 1 to 8, **characterised in that** a fourth layer (14) is arranged on the third layer (4), preferably has perforations (19) in its upper and lower regions and is spaced apart from the third layer (4).

10. The infrared surface heating assembly according to Claim 9, **characterised by** the surface-to-surface fitting of the fourth layer (14) on the third layer (4).

11. The infrared surface heating assembly according to at least one of Claims 1 to 10, **characterised in that** the first layer (1) contains, as a rear wall, a substance with an aluminium compound and/or a substance containing a sheet metal, ceramic and/or gypsum.

12. The infrared surface heating assembly according to at least one of Claims 1 to 11, **characterised in that** the third layer (4) and/or fourth layer (14) have a polyethylene compound, a polyurethane compound or materials containing aluminium, glass and/or ceramic.

13. The infrared surface heating assembly according to at least one of Claims 1 to 12, **characterised in that** the layers (2, 3, 4, 14) are stuck to one another and/or their edges (22) are held in a form-fitting, frictionally engaged and or force-fitting manner in a frame which, in cross-section, is U-shaped, preferably circumferential.

14. The infrared surface heating assembly according to at least one of Claims 1 to 13, **characterised in that** the infrared surface element has a heat output of 130 W, 300 W, 360 W, 450 W, 540 W, 600 W, 1000 W or 1200 W.

15. The infrared surface heating assembly according to at least one of Claims 1 to 13, **characterised in that** the infrared surface element has a heat output of 100 W to 130 W.

16. The infrared surface heating assembly according to at least one of Claims 1 to 15, **characterised in that** braces (7) for placing against a wall or ceiling are arranged on the rearside of the first layer (1).

17. Use of the infrared surface heating assembly according to at least one of Claims 1 to 16 in sanitary equipment, in particular transportable, preferably mobile, WC equipment, toilet seats, toilet lids, mobile telephones, carwash units, loading ramps, in a rearward region of heavy goods vehicles, floor panels, defrosting units of cold stores and/or as winter frost protection units and/or as under-table heating and/or underfloor heating.

## Revendications

1. Dispositif de chauffage de surfaces à infrarouge avec un élément de surface infrarouge électrique en tant que chauffage de surfaces à infrarouge dans une plage d'infrarouge de 5 à 200 µm avec
une première couche (1) en tant que paroi arrière pour l'isolation thermique,
une deuxième couche (2), qui contient un matériau de type plastique contenant un composé de polyuréthane et est conçue comme un revêtement réfléchissant et
une troisième couche (4), qui comprend l'élément de surface infrarouge électrique sous la forme d'un tapis chauffant, qui contient un matériau de type plastique contenant un composé de polytéréphtalate d'éthylène,
**caractérisé en ce que**
la troisième couche (4) comprend, dans ses parties supérieure et inférieure, des passages (19),
la troisième couche (4) est distante de la deuxième couche (2),
le rapport (L/I) entre la superficie totale (L) de la troisième couche (4) et la surface (I) de l'élément de surface infrarouge est de 1,1 à 6,0,
le rapport (L/Db) entre la superficie totale (L) de la troisième couche (4) et la superficie (Db) des passages (19) de la troisième couche (4) est de l'ordre de 6,0 à 16,3,
l'élément de surface infrarouge présente une puissance de chauffage de 100 à 1 200 W.

2. Dispositif de chauffage de surfaces infrarouge selon la revendication 1, **caractérisé en ce que** la plage infrarouge est de 6 à 15 µm, de préférence de 6 à 14 µm ou de 7 à 11 µm ou de 8 à 15 µm.

3. Dispositif de chauffage de surfaces infrarouge selon la revendication 1 ou 2, **caractérisé en ce que** le rapport (SD/A) entre l'épaisseur totale (SD) et la distance (A) entre la troisième couche (4) et la première couche (1) est de 1,5 à 20,0, de préférence de 2,0 à 17,0.

4. Dispositif de chauffage de surfaces infrarouge selon la revendication 3, **caractérisé en ce que** le rapport (SD/A) entre l'épaisseur totale (SD) et la distance (A) entre la troisième couche (4) et la première couche (1) est de 1,7 ou 2,3 ou 5,5 ou 7,3 ou 16,25 ou 16,3.

5. Dispositif de chauffage de surfaces infrarouge selon au moins l'une des revendications 1 à 4, **caractérisé en ce que** le rapport (x-SD/A) entre l'épaisseur totale (SD) et la distance (A) entre la troisième couche (4) et la deuxième couche (2) est de 5,0 à 13,0, de préférence de 6,6 à 11,5.

6. Dispositif de chauffage de surfaces infrarouge selon la revendication 5, **caractérisé en ce que** le rapport (x-SD/A) entre l'épaisseur totale (SD) et la distance (A) entre la troisième couche (4) et la deuxième couche (2) est de 6,6 ou 11,5.

7. Dispositif de chauffage de surfaces infrarouge selon au moins l'une des revendications 1 à 6, **caractérisé en ce que** le rapport (L/Db) entre la superficie totale (L) de la troisième couche (4) et la superficie (Db) des passages (19) de la troisième couche (4) est compris entre 6,0 et 9,35.

8. Dispositif de chauffage de surfaces infrarouge selon la revendication 7, **caractérisé en ce que** le rapport (L/Db) entre la superficie totale (L) de la troisième couche (4) et la superficie (Db) des passages (19) de la troisième couche (4) est de 6,0 ou 9,35.

9. Dispositif de chauffage de surfaces infrarouge selon au moins l'une des revendications 1 à 8, **caractérisé en ce qu'**une quatrième couche (14) est disposée sur la troisième couche (4), comprend de préférence, dans ses parties supérieure et inférieure, des passages (19 et est distante de la troisième couche (4).

10. Dispositif de chauffage de surfaces infrarouge selon la revendication 9, **caractérisé en ce que** la quatrième couche (14) est en appui sur la troisième couche (4) surface contre surface.

11. Dispositif de chauffage de surfaces infrarouge selon au moins l'une des revendications 1 à 10, **caractérisé en ce que** la première couche (1) contient, en tant que paroi arrière, un matériau avec un composé d'aluminium et/ou un matériau contenant de la tôle, de la céramique et/ou du plâtre.

12. Dispositif de chauffage de surfaces infrarouge selon au moins l'une des revendications 1 à 11, **caractérisé en ce que** la troisième couche (4) et/ou la quatrième couche (14) comprennent un composé de polyéthylène, un composé de polyuréthane, des matériaux contenant de l'aluminium, du verre et/ou de la céramique.

13. Dispositif de chauffage de surfaces infrarouge selon au moins l'une des revendications 1 à 12, **caractérisé en ce que** les couches (2, 3, 4, 14) sont collées entre elles et/ou leurs bords (22) sont maintenus par, complémentarité de forme, par friction et/ou par force dans un cadre à section transversale en forme de U, de préférence sur la circonférence.

14. Dispositif de chauffage de surfaces infrarouge selon au moins l'une des revendications 1 à 13, **caractérisé en ce que** l'élément de surface infrarouge présente une puissance de chauffage de 130 W, 300 W, 360 W, 450 W, 540 W, 600 W, 1 000 W ou 1 200 W.

15. Dispositif de chauffage de surfaces infrarouge selon au moins l'une des revendications 1 à 13, **caractérisé en ce que** l'élément de surface infrarouge présente une puissance de chauffage de 100 W à 130 W.

16. Dispositif de chauffage de surfaces infrarouge selon au moins l'une des revendications 1 à 15, **caractérisé en ce que**, sur le côté arrière de la première couche (1) sont disposées des entretoises (7) pour la pose contre un mur ou un plafond.

17. Utilisation du dispositif de chauffage de surfaces infrarouge selon au moins l'une des revendications 1 à 16 dans des installations sanitaires, plus particulièrement des installations de toilettes transportables, de préférence mobiles, des lunettes de toilettes, des couvercles de toilettes, des téléphones mobiles, des installations de lavage automatique de voitures, des rampes de chargement, dans une partie arrière de poids-lourds, des panneaux de sol, des installations de dégivrage de chambres froides et/ou des installations de protection contre le gel hivernal et/ou en tant que chauffage sous table et/ou en tant que chauffage de sol.
